(19) Europäisches Patentamt
European Patent Office
Office européen des brevets

(11) EP 4 212 837 B1

(12) **EUROPEAN PATENT SPECIFICATION**

(45) Date of publication and mention of the grant of the patent:
**04.06.2025 Bulletin 2025/23**

(21) Application number: **21885660.7**

(22) Date of filing: **25.08.2021**

(51) International Patent Classification (IPC):
***G01J 5/00*** *(2022.01)* ***G01J 5/08*** *(2022.01)*
***G01J 5/80*** *(2022.01)* ***G01J 5/70*** *(2022.01)*
***C23C 2/06*** *(2006.01)* ***C23C 2/40*** *(2006.01)*
***C23C 2/00*** *(2006.01)*

(52) Cooperative Patent Classification (CPC):
**G01J 5/0003; C23C 2/06; C23C 2/40; C23C 2/50; C23C 2/52; C23C 2/526; G01J 5/0022; G01J 5/0893; G01J 5/0896; G01J 5/70; G01J 5/802;** G01J 2005/0077

(86) International application number:
**PCT/JP2021/031087**

(87) International publication number:
**WO 2022/091541 (05.05.2022 Gazette 2022/18)**

(54) **SURFACE TEMPERATURE MEASURING METHOD, SURFACE TEMPERATURE MEASURING APPARATUS, HOT-DIP ZINC PLATED STEEL SHEET MANUFACTURING METHOD, AND HOT-DIP ZINC PLATED STEEL SHEET MANUFACTURING EQUIPMENT**

OBERFLÄCHENTEMPERATURMESSVERFAHREN, OBERFLÄCHENTEMPERATURMESSVORRICHTUNG, VERFAHREN ZUR HERSTELLUNG EINES FEUERVERZINKTEN STAHLBLECHS UND ANLAGE ZUR HERSTELLUNG EINES FEUERVERZINKTEN STAHLBLECHS

PROCÉDÉ DE MESURE DE TEMPÉRATURE DE SURFACE, DISPOSITIF DE MESURE DE TEMPÉRATURE DE SURFACE, PROCÉDÉ DE FABRICATION DE TÔLE D’ACIER GALVANISÉE À CHAUD, ET INSTALLATION DE FABRICATION DE TÔLE D’ACIER GALVANISÉE À CHAUD

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.10.2020 JP 2020179302**

(43) Date of publication of application:
**19.07.2023 Bulletin 2023/29**

(73) Proprietor: **JFE Steel Corporation**
**Tokyo 100-0011 (JP)**

(72) Inventors:
- **ONO, Hiroaki**
  **Tokyo 100-0011 (JP)**
- **TAKEDA, Yuki**
  **Tokyo 100-0011 (JP)**
- **HISAJIMA, Nozomi**
  **Tokyo 100-0011 (JP)**
- **TAKEI, Yumiko**
  **Tokyo 100-0011 (JP)**

(74) Representative: **Grünecker Patent- und Rechtsanwälte**
**PartG mbB**
**Leopoldstraße 4**
**80802 München (DE)**

(56) References cited:
**WO-A1-2019/122815**
**JP-A- 2004 301 604**
**JP-A- 2020 034 430**
**JP-A- H0 626 935**
**JP-A- H0 763 613**
**JP-A- H01 245 125**
**JP-A- H05 209 792**
**JP-A- H05 231 945**
**JP-A- H09 166 494**
**JP-A- S 636 428**
**JP-A- S 636 428**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 212 837 B1

## Description

Field

The present invention relates to a surface temperature measuring method, a surface temperature measuring apparatus, a hot-dip zinc plated steel sheet manufacturing method, and a hot-dip zinc plated steel sheet manufacturing equipment.

Background

In a hot-dip galvanizing line (hereinafter, referred to as CGL) in a steel process, temperature control is a very important work in production of materials and quality control of plating. In particular, in the alloying process by heating the steel sheet after zinc adhesion, an excessively high steel sheet temperature causes occurrence of powdering while an excessively low steel sheet temperature causes insufficient alloying. Furthermore, an excessively high steel sheet temperature, in the high- strength material, causes coarsening of the crystal grain size, leading to deterioration of material characteristics. In view of these, CGL is required to achieve very strict temperature control.

Here, examples of a method of heating the steel sheet include electromagnetic induction heating (hereinafter, denoted as IH) and heat transfer by radiant heat. In addition, examples of the method of the temperature control include a method of calculating the temperature of the steel sheet immediately after heating by heat transfer calculation or electromagnetic field simulation based on an output of IH or direct heating, the steel sheet conveyance speed, the sheet size, and the temperature of the molten zinc pod. With this method, however, there would be variations in the calculation result of the steel sheet temperature due to a slight variation in the thickness of the steel sheet and the passline. For this reason, it is also important to directly measure the steel sheet temperature.

Proposed methods of directly measuring the temperature of the steel sheet include methods such as a radiation thermometry and a temperature measurement roll method (refer to Non Patent Literature 1). However, during the manufacture of the hot-dip zinc plated steel sheet, the emissivity of the steel sheet surface greatly fluctuates depending on the progress of alloying, leading to an occurrence of a large measurement error in a radiation thermometer that presets the emissivity as a fixed value. To handle this, several efforts have been made as measures against the problem of emissivity setting necessary for the radiation thermometry.

Specifically, there is an invented thermometer being a multiple reflection radiation thermometer utilizing a rule that the emissivity approaches 1 by multiple reflection of radiation light. In addition, there are other types of thermometers developed, such as a wedge type radiation thermometer (refer to Patent Literature 1) using multiple reflection generated in a gap between a roll and a steel sheet on the assumption that the roll and the steel sheet are isothermal, and a bowl type radiation thermometer (refer to Patent Literature 2) in which a concave member having a high reflectance such as a member with gold plating is brought close to a measurement object.

Furthermore, there is another proposed method in which a reflection characteristic of a measurement object is measured using a law that a sum of an integrating sphere reflectance and an emissivity of the measurement object is 1, and the integrating sphere reflectance is estimated to estimate the emissivity (refer to Patent Literature 3). In addition, there is also a method referred to as a TRACE thermometer that measures the emissivity of the surface of a measurement object under multiple wavelengths or different polarization conditions, and simultaneously estimates the information regarding the change in the surface due to alloying and the temperature by preliminary learning (refer to Non Patent Literature 2).

JP 2020 034430 A describes a surface temperature measurement based on acquired specular and diffuse reflection light amounts.

Citation List

Patent Literature

Patent Literature 1: JP 4-58568 A
Patent Literature 2: JP 10-185693 A
Patent Literature 3: JP 5-209792 A

Non Patent Literature

Non Patent Literature 1: Tetsu-to-Hagane (Iron and Steel) Vol.79 No.7, 765 -771, 1993
Non Patent Literature 2: Tetsu-to-Hagane (Iron and Steel) Vol.79 No.7, 772 -778, 1993
Non Patent Literature 3: JIS C 1612 Test Methods for Radiation Thermometers

## Summary

### Technical Problem

However, when the surface of the steel sheet has at a high temperature, the steel sheet and the roll cannot be brought into contact with each other in a state where molten zinc adheres to the surface of the steel sheet. Therefore, there is no roll until the subsequent stage of the passline of the steel sheet, and a method such as a temperature measuring roll cannot be used for measuring the temperature of the steel sheet.

On the other hand, the progress of the alloying reaction varies depending on the type and size of the steel sheet and the conveyance conditions. For example, in the case of heating a steel sheet for the purpose of alloying, the target temperature of the steel sheet is about 450°C to 550°C. In the case of measuring the temperature of the steel sheet using an InGaAs element suitable for radiation thermometry, the emissivity of the surface of the steel sheet changes to the value about 0.2 to 0.7 before and after alloying. This corresponds to a difference of 60°C or more in terms of temperature, which leads to a failure of accurate measurement of the temperature of the steel sheet.

In addition, among various methods as described above which have been proposed in order to solve the problem of the emissivity fluctuation, the wedge type radiation thermometer is not applicable to the time immediately after heating having temperature measurement needs, similarly to the temperature measuring roll. In addition, the bowl type radiation thermometer also needs to make a lift-off distance of the passline very small. However, fluctuation of the passline cannot be suppressed by the roll after the molten zinc adhesion in the CGL, making it difficult to apply the bowl type radiation thermometer due to the lift-off distance.

Meanwhile, the method of estimating the emissivity by estimating the integrating sphere reflectance has been used in an application example in other cold rolled steel sheet processes. However, the diffusibility of the surface of the steel sheet is very high in the alloying process, lowering the estimation accuracy of the integrating sphere reflectance and the emissivity. Furthermore, the TRACE thermometer, which is not based on a physical model, is susceptible to unexpected disturbance and phenomenon, and thus has a limited practicability.

Under these circumstances, there has been a high demand for a technique capable of accurately measuring the temperature of a steel sheet in a hot-dip galvanizing line regardless of a fluctuation in emissivity of the surface of the hot-dip zinc plated steel sheet during the manufacture of the hot-dip zinc plated steel sheet.

The present invention has been made in view of the above problems and aims to provide a surface temperature measuring method and a surface temperature measuring apparatus capable of accurately measuring a surface temperature of a measurement object regardless of a fluctuation in emissivity of the surface of the measurement object. The present invention also aims to provide a hot-dip zinc plated steel sheet manufacturing method and a manufacturing equipment capable of manufacturing a hot-dip zinc plated steel sheet with high yield by accurately measuring a steel sheet temperature in a hot-dip galvanizing line regardless of an alloying process. Solution to Problem

To solve the problem and achieve the object, the invention provides a surface temperature measuring method according to claim 1.

In the surface temperature measuring method according to the present invention, the emissivity calculating step is executed in a case where a specular reflection light amount acquired in the second imaging step is less than a predetermined value, and a fixed value is used as the emissivity in the temperature measurement step in a case where the specular reflection light amount acquired in the second imaging step is a predetermined value or more.

Moreover, in the surface temperature measuring method according to the present invention, each of the second imaging step and the third imaging step includes a step of correcting the specular reflection light amount and the diffuse reflection light amount by subtracting the radiation light amount acquired in the first imaging step.

Moreover, in the surface temperature measuring method according to the present invention, the first imaging step, the second imaging step, and the third imaging step include a step of receiving light using a light receiving element having a plurality of visual fields to which acquisition ranges of the radiation light amount, the specular reflection light amount, and the diffuse reflection light amount are assigned in a conveyance direction of the measurement object.

Moreover, in the surface temperature measuring method according to the present invention, the measurement object is a hot-dip zinc plated steel sheet.

The invention further provides a surface temperature measuring apparatus according to claim 5.

Moreover, in the surface temperature measuring apparatus according to the present invention, the measurement object is a hot-dip zinc plated steel sheet.

Moreover, a hot-dip zinc plated steel sheet manufacturing method according to the present invention includes manufacturing steps of manufacturing a hot-dip zinc plated steel sheet, the manufacturing steps of manufacturing the hot-dip zinc plated steel sheet includes: a temperature measurement step of measuring a surface temperature of the hot-dip zinc plated steel sheet by the surface temperature measuring method according to the present invention; and a step of controlling manufacturing conditions in the manufacturing steps by using the surface temperature measured in the temperature measurement step.

Moreover, a hot-dip zinc plated steel sheet manufacturing equipment according to the present invention includes: the surface temperature measuring apparatus according to the present invention; and an equipment that manufactures a hot-dip zinc plated steel sheet based on a surface temperature of a hot-dip zinc plated steel sheet measured by the surface temperature measuring apparatus. Advantageous Effects of Invention

According to the surface temperature measuring method and the surface temperature measuring apparatus of the present invention, the surface temperature of the measurement object can be accurately measured regardless of the fluctuation in the emissivity of the surface of the measurement object. In addition, according to the hot-dip zinc plated steel sheet manufacture method and manufacturing equipment according to the present invention, it is possible to accurately measure the temperature of a steel sheet in a hot-dip galvanizing line regardless of an alloying process, enabling manufacture of a hot-dip zinc plated steel sheet with high yield.

Brief Description of Drawings

FIG. 1 is a diagram illustrating a configuration of an experimental apparatus according to an embodiment of the present invention.

FIG. 2 is a diagram illustrating an example of a relationship between emissivity and specular reflectance (specular reflection luminance value) and diffuse reflectance (diffuse reflection luminance value).

FIG. 3 is a diagram illustrating a relationship between a thermocouple temperature and a radiation temperature measurement result in the present invention example and a monochromatic radiation thermometer.

FIG. 4 is a diagram illustrating an application example of a temperature measuring apparatus according to an embodiment of the present invention to an actual line.

FIG. 5 is a diagram illustrating a modification of the application example illustrated in FIG. 4.

FIG. 6 is a diagram illustrating a modification of the application example illustrated in FIG. 4.

FIG. 7 is a diagram illustrating installation conditions of specular reflection light sources.

FIG. 8 is a diagram illustrating installation conditions of a diffuse reflection light source.

FIG. 9 is a diagram illustrating an actual temperature measurement result before and after filtering.

FIG. 10 is a diagram illustrating a configuration of a first modification of a temperature measuring apparatus according to an embodiment of the present invention.

FIG. 11 is a diagram illustrating a configuration of a second modification of a temperature measuring apparatus according to an embodiment of the present invention.

FIG. 12 is a diagram illustrating changes in luminance values of self-emitted light, averaged specular reflection light, and diffuse reflection light.

FIG. 13 is a diagram illustrating surface temperatures measured by the present invention example and Comparative Examples 1 and 2.

FIG. 14 is a diagram illustrating a relationship between the degree of alloying and the surface temperature in the present invention example and Comparative Example 2. Description of Embodiments

The radiation thermometry is a method of calculating the surface temperature of a measurement object using a measured radiation amount and a preset emissivity by using a rule that the radiation amount of the measurement object is theoretically determined by the temperature and the emissivity. Here, the emissivity of the measurement object changes within a range of 0 to 1 depending on the state and shape of the surface of the measurement object. Therefore, in order to accurately measure the surface temperature of the measurement object, the emissivity of the measurement object needs to be set to a correct value. Accordingly, many commonly used radiation thermometers preliminarily measure the emissivity of the measurement object or use a known emissivity for the measurement object to preset the emissivity as a fixed value. Under this condition, the radiation light amount is measured, and the surface temperature of the measurement object is obtained from a standard curve. Examples of the method of measuring the emissivity described herein include a method in which a black body paint having a known emissivity is applied to measure a radiation light amount ratio with respect to a measurement target site, and a method in which a surface temperature value obtained by another measuring method such as a thermocouple is theoretically converted into a radiation amount for comparison.

On the other hand, in a general radiation thermometer that presets an emissivity as a fixed value, an actual emissivity greatly deviating from the set emissivity would produce a large measurement error. In particular, on the exit side of the alloying process by IH heating after the zinc pod, the steel sheet surface can take a variety of states, including a state where the surface of the steel sheet is close to a mirror surface far from being alloyed and a state where the alloying progresses to be close to a rough surface. Therefore, presetting the emissivity as a fixed value will inevitably lead to occurrence of a large deviation from the actual emissivity. In addition, the progress of the degree of alloying greatly changes depending on components and manufacturing conditions, making it difficult to predict the surface state and the emissivity in advance. To handle this situation and accurately perform the radiation temperature measurement, the inventors have studied techniques of correctly estimating the emissivity in real time with respect to the fluctuating surface property of the measurement object and converting the radiance into the temperature with the estimated emissivity. Here, a method of estimating the emissivity focuses on the Kirchhoff's law in which the sum of the emissivity and the integrating sphere reflectance is 1. Patent Literature 3 describes a method of calculating an integrating sphere reflectance based on reflection distribution information, although it is difficult to accurately measure a parameter of a spread of a specular reflection component that greatly contributes to accuracy, leading to failure of acquisition of sufficient accuracy. Still, the reflection characteristic of the measurement object has a close physical relationship with the emissivity, and thus, is considered to be an important clue in estimating the emissivity even for a surface that changes in the course of alloying the hot-dip zinc plated steel sheet.

Therefore, the inventors of the present invention have focused on the fact that reflection characteristics are typically expressed by the sum of specular reflection and diffuse reflection, and have studied the relationship between the emissivity and two types of reflection characteristics, namely, specular reflection and diffuse reflection, in the surface state in the alloying process of the hot-dip zinc plated steel sheet. As a result, as will be described below, the present inventors have found that the surface state in the alloying process includes two processes: step S1 in which the specularity gradually decreases from a state in which the specularity is very high by hot-dip zinc plating and the diffusibility is increased to almost a perfect diffusion surface; and step S2 in which the diffuse reflectance gradually decreases from a state in which the surface is the perfect diffusion surface. In addition, it has been found that the emissivity does not fluctuate in step S1, and the emissivity increases as the diffuse reflectance decreases according to Kirchhoff's law in step S2 in which almost no specular reflection component exists. In these steps, it is difficult to follow the alloying process with either one of only the specular reflection component or only the diffuse reflection component. The progress of alloying and the emissivity can be correctly estimated by combining both reflection components. As a result of intensive studies based on these findings, the inventors of the present invention have conceived a technical idea that a surface temperature of a hot-dip zinc plated steel sheet can be accurately measured by a method in which a surface image of the hot-dip zinc plated steel sheet is captured under specular reflection conditions and diffuse reflection conditions in a hot-dip galvanizing line, and an emissivity is calculated in real time from a preliminarily modeled relationship between the emissivity and the specular reflectance, and between the emissivity and the diffuse reflectance.

Specifically, when measuring the surface temperature of the hot-dip zinc plated steel sheet using the present invention, the first step will be a calibration of the radiation thermometer and preliminary modeling of the relationship between the emissivity and the specular reflectance, and the relationship between the emissivity and the diffuse reflectance. Here, as the radiation thermometer, since the target surface temperature of the hot-dip zinc plated steel sheet is about 450°C to 550°C, it is preferable to use an InGaAs element, and preferable to make the wavelength sensitivity as narrow as possible using a long pass filter, a short pass filter, or a band pass filter. Among various methods for calibrating the radiation thermometer, and the method described in Non Patent Literature 3 may be applied as an example. The radiation thermometer described herein is an optical sensor such as an area sensor, a line sensor, or a single element sensor, and has a function as a radiation thermometer by being graduated at each temperature of the black body condition.

The relationship between the emissivity and the specular reflectance, and the relationship between the emissivity and the diffuse reflectance can be modeled by measuring the specular reflection light amount, the diffuse reflection light amount, and the radiation light amount when the hot-dip zinc plated steel sheet is actually heated by an experimental apparatus as illustrated in FIG. 1, for example. Hereinafter, the configuration of the experimental apparatus illustrated in FIG. 1 and the modeling procedure will be described.

When the relationship between the emissivity and the specular reflectance, and the relationship between the emissivity and the diffuse reflectance is modeled using the experimental apparatus illustrated in FIG. 1, the first step will be welding a thermocouple 1 to the surface of a hot-dip zinc plated steel sheet S before alloying, and applying a black body spray 2 to a part of the surface of the hot-dip zinc plated steel sheet S. Next, the hot-dip zinc plated steel sheet S is placed on a heater 3 capable of uniformly heating entire parts of the hot-dip zinc plated steel sheet S. The heating method may be any of heat transfer, IH heating, and energization heating as long as the hot-dip zinc plated steel sheet S can be uniformly heated. Still, when the thermocouple 1 is welded, it is necessary to provide a protective measure so that the measurement is not affected in IH heating or energization heating.

Next, operations are performed to install a radiation thermometer 4, a specular reflection light source 5 that irradiates the surface of the hot-dip zinc plated steel sheet S with light under a specular reflection condition, and a diffuse reflection light source 6 that irradiates the surface of the hot-dip zinc plated steel sheet S with light under a diffuse reflection condition. Although the radiation thermometer 4 cannot be installed in front of the hot-dip zinc plated steel sheet S in order to match the light projection angle and the light reception angle of the specular reflection light source 5, it is still desirable to install the radiation thermometer 4 so as to be perpendicular to the surface of the hot-dip zinc plated steel sheet S as much as possible within an installable range. The diffuse reflection condition is desirably set to an angle different from the specular reflection condition by 45° or more. In addition, it is preferable that turning on/off of the specular reflection light source 5 and the diffuse reflection light source 6 can be switched by a power source, a shutter, or the like.

The hot-dip zinc plated steel sheet in the present specification is not particularly limited as long as zinc is contained in the plating layer. Examples of the hot-dip zinc plated steel sheet include a hot-dip galvanized steel sheet (GI), a hot-dip galvannealed steel sheet (GA) obtained by alloying a hot-dip galvanized steel sheet, a Zn-Al-Mg plated steel sheet (for example, Zn-6 mass%Al-3mass%Mg alloy plated steel sheet and Zn-11mass%Al-3mass%Mg alloy plated steel sheet), and a Zn-Al plated steel sheet (for example, Zn-5mass%Al-alloy plated steel sheet and Zn-55mass%Al-alloy plated steel sheet).

Furthermore, the hot-dip zinc plated layer may contain, as a small amount of dissimilar metal elements or impurities, one or more of nickel, cobalt, manganese, iron, molybdenum, tungsten, titanium, chromium, aluminum, magnesium, lead, antimony, tin, copper, and silicon. The hot-dip zinc plated layer may be formed by using two or more hot-dip zin plated layers of the same type or different types among the hot-dip zinc plated layers described above.

Next, a model indicating the relationship between the emissivity and the diffuse reflectance, and the relationship between the emissivity and the specular reflectance is generated using the above-described experimental apparatus. Specifically, the following steps (a) to (e) are repeatedly executed while gradually heating the hot-dip zinc plated steel sheet S.

(a) The radiation light amount is acquired by turning off the specular reflection light source 5 and the diffuse reflection light source 6 or closing the shutter to capture a surface image of the hot-dip zinc plated steel sheet S.
(b) The sum of the specular reflection light amount and the radiation light amount is acquired by turning on only the specular reflection light source 5 or opening the shutter to capture the surface image of the hot-dip zinc plated steel sheet S.
(c) The sum of the diffuse reflection light amount and the radiation light amount is acquired by turning on only the diffuse reflection light source 6 or opening the shutter to capture the surface image of the hot-dip zinc plated steel sheet S.
(d) The specular reflection light amount and the diffuse reflection light amount are calculated by subtracting the light amount acquired in the process (a) from the light amount acquired in the processes (b) and (c). At this time, in a case where the exposure time is different for each imaging of the surface image, correction is performed in consideration of a difference in light amount due to the difference in exposure time.
(e) The emissivity is calculated by comparing the surface temperature measured by the thermocouple 1 with the surface temperature measured by the calibrated radiation thermometer 4, or by comparing the emissivity component with the emissivity of the location where the black body spray 2 has been applied when the radiation thermometer 4 is a line sensor or an area sensor.

Note that it is preferable to set the heating rate so that substantially the same surface state of the hot-dip zinc plated steel sheet S can be imaged in the processes (a) to (c) in consideration of the exposure time and the measurement time. With this operation, for example, within the range of the heating temperature of the hot-dip zinc plated steel sheet S as illustrated in FIG. 2, it is possible to create a model indicating the relationship between the emissivity and the specular reflectance of the surface of the hot-dip zinc plated steel sheet S and the relationship between the emissivity and the diffuse reflectance of the surface of the steel sheet S.

FIGS. 2(a) and 2(b) respectively illustrate an example of a relational model of the emissivity and the specular reflectance (specular reflection luminance value) and an example of a relational model of the emissivity and the diffuse reflectance (diffuse reflection luminance value), which are obtained by the above modeling procedure. As illustrated in FIG. 2, it can be seen that the surface state of the hot-dip zinc plated steel sheet is constituted by two processes of step S1 in which the specularity gradually decreases and the diffusibility increases to almost the perfect diffusion surface, and step S2 in which the diffuse reflectance gradually decreases from the state of the perfect diffusion surface. Here, in order to accurately estimate the emissivity, there is a need to have an index corresponding to the emissivity on a one-to-one basis. With the specular reflection alone, there is no fluctuation in the amount of specular reflection light in a high emissivity region, making it difficult to perform estimation. On the other hand, with the diffuse reflection alone, there can be two emissivity values for one diffuse reflection light amount although there is wide sensitivity to the emissivity fluctuation. To handle this, by adding specular reflection information, it is possible to determine which one of the two corresponding emissivity values is the target, leading to high accuracy estimation of the emissivity by combining the specular reflection light amount and the diffuse reflection light amount.

With this model, the emissivity of the hot-dip zinc plated steel sheet can be accurately estimated by measuring the specular reflectance and the diffuse reflectance of the surface of the hot-dip zinc plated steel sheet. This makes it possible to perform accurate calculation of the surface temperature of the hot-dip zinc plated steel sheet by using the radiation light amount and the emissivity regardless of the fluctuation in the emissivity of the surface of the hot-dip zinc plated steel sheet during the production of the hot-dip zinc plated steel sheet. In addition, by manufacturing a hot-dip zinc plated steel sheet based on the calculated surface temperature, the hot-dip zinc plated steel sheet can be manufactured with good yield.

The specular reflectance and the diffuse reflectance of the hot-dip zinc plated steel sheet can be obtained by measuring relative values with respect to the specular reflectance and the diffuse reflectance of a sample piece having a reflectance as a normal reference being close to 1. Examples of the sample piece can be a gold mirror and an aluminum mirror for acquisition of the specular reflectance, and can be barium sulfate for acquisition of the diffuse reflectance. Alternatively, the modeling can be performed using a reflection light amount with reference to the light amount of the light source. In this case, a light source with a constant irradiation light amount can be applied to an imaging system with a constant sensitivity, and the obtained luminance value can be directly used as a model. In addition, although the shutter is used in the modeling procedure described above, it is not always necessary to use the shutter as long as it is possible to acquire the specular reflection image, the diffuse reflection image, and the self-emitted light image in the same surface state. Alternatively, instead of using a shutter, it is allowable to prepare a plurality of samples in states of different degrees of alloying, measure the specular reflectance and the diffuse reflectance, and further heat the sample to such an extent that the surface state does not change to obtain the emissivity to achieve modeling.

When the temperature measuring method according to an embodiment of the present invention is applied to the actual line, the radiation light amount, the amount of specular reflection light, and the diffuse reflection light amount are acquired from the hot-dip zinc plated steel sheet of the actual line. At this time, the emissivity is calculated using the model from the acquired specular reflection light amount and diffuse reflection light amount. The emissivity can be calculated by various methods. For example, when the number of points of the model obtained in an experiment is N, the specular reflection light amount is rs, the diffuse reflection light amount is rd, and the emissivity is e, the model can be expressed as a three-dimensional vector ((rsn,rdn,en)(n=1,...,N). When the number of points of the actual operation model is insufficient, it is allowable to increase the points by interpolation. When en is uniquely determined by first determining rsn and rdn, e may be approximated and used as a function of rs and rd, such as e = f(rs,rd).

Here, assuming that the specular reflection light amount obtained by actual measurement is Rs and the diffuse reflection light amount is Rd, the coordinate position (degree of alloying) and the emissivity on the model at the time of measurement can be estimated by distance minimization as in the following Formula (1). Note that weights may be applied to the specular reflection light amount and the diffuse reflection light amount as necessary. Naturally, a similar result can be obtained even when the norm of the distance is changed.

$$\min_{1 \le n \le N} |Rs - rs_n| + |Rd - rd_n| \quad (1)$$

In this case, step S1 and step S2 can be separated as clearly different physical phenomena. Accordingly, it is allowable to first select whether the surface state of the hot-dip zinc plated steel sheet is classified into step S1 or step S2, and then calculate the coordinate position on the model in each process. For example, a simplest method would be setting a threshold for the specular reflectance, and classifying the state to step S1 when the specular reflectance is the threshold or more, and classifying the state into step S2 when the specular reflectance is less than the threshold. In step S1, since the emissivity hardly fluctuates, the emissivity can be set to a fixed value (about 0.2), and in step S2, the coordinate position on the model and the emissivity can be estimated from the value of the diffuse reflection light amount. Many methods of determining the optimum coordinate position on the model have been proposed in addition to this method, and thus, any method may be used as long as the coordinate position on the model can be correctly obtained.

FIG. 3 illustrates a comparison represented by the result (present invention example) obtained, actually in a laboratory, by calculating the emissivity from the specular reflectance and the diffuse reflectance, correcting the calculated emissivity, and then measuring the temperature and the result (monochromatic radiation thermometer) obtained by fixing the emissivity to 0.2 and measuring the temperature, with respect to the temperature measured by the thermocouple 1. In FIG. 3, a vertical axis represents a radiation temperature measurement result, and a horizontal axis represents a temperature measurement result with a thermocouple as a true value. In this measurement, the hot-dip zinc plated steel sheet was gradually heated, and the temperature was measured during the progress of alloying. The actual emissivity is about 0.2 in the region near the start of heating in which alloying is not progressed in the hot-dip zinc plated steel sheet. Therefore, even in the monochromatic radiation thermometer in which the emissivity is fixed to 0.2, and also in the present invention example in which each reflectance is measured and the emissivity is estimated to be about 0.2, both results match the temperature measurement result of the thermocouple. Thereafter, alloying proceeded with heating with a gradual increase in the actual emissivity, the measured temperature value of the monochromatic radiation thermometer assuming an emissivity of 0.2 deviated upward as compared with the value of the thermocouple, leading to a final error of about 60°C as illustrated in FIG. 3. In contrast, the present invention example estimates the emissivity from each reflectance, it is possible to cope with an actual change in emissivity at the time of temperature measurement. Accordingly, with respect to the fluctuation in the emissivity of the surface generated in step S1 and step S2, the temperature measurement result of the present invention example substantially matches the temperature measurement result of the thermocouple. In actual operation, the degree of progress of alloying fluctuates depending on various operating conditions, not necessarily correlating with the temperature. Therefore, it is necessary, in the temperature measurement target region, to correctly measure the temperature regardless of the progress degree of alloying. However, the error increases in the monochromatic radiation thermometer assuming a specific emissivity. In contrast, the present invention example can accurately estimate the emissivity regardless of the degree of progress of alloying, making it possible to constantly measure the temperature with high accuracy.

FIG. 4 illustrates an application example of the temperature measuring apparatus according to an embodiment of the present invention to an actual line. In the example illustrated in FIG. 4, a temperature measuring apparatus 10 according to an embodiment of the present invention was installed immediately after molten zinc was attached to a steel sheet in a molten zinc pot 11 and then heated to an alloying target temperature in a heating furnace 12 (on the entrance side of a heat retention zone 13). The temperature measuring apparatus 10 includes the radiation thermometer 4, the specular reflection light source 5, and the diffuse reflection light source 6 illustrated in FIG. 1. At this time, when the surface temperature of the hot-dip zinc plated steel sheet S is about 450°C to 550°C, radiation light has a great intensity, making it necessary to have the specular reflection light source 5 and the diffuse reflection light source 6 with very high intensity. In particular, since the light amount is smaller in the diffuse reflection light amount compared with the specular reflection light, it is most preferable to use a halogen lamp. Note that since the halogen lamp requires several minutes or more to be started up for stabilization of the light amount after turn-on, it is preferable to switch turn-on/off using the shutter 7 for enabling constant lighting. In addition, an infrared LED may be used with sufficient attention to the issue of the light amount, and an infrared laser may be used with sufficient attention to the reflection polarization characteristic of the object.

In the example illustrated in FIG. 4, the specular reflection light source 5 is installed in the downstream of the diffuse reflection light source 6 in the conveyance direction of the hot-dip zinc plated steel sheet S. However, as illustrated in FIG. 5, the installation positions of the specular reflection light source 5 and the diffuse reflection light source 6 may be reversed. As illustrated in FIG. 6, the specular reflection light source 5 and diffuse reflection light source 6 may be installed at the same position on the passline of hot-dip zinc plated steel sheet S. With regard to the installation positions of the specular reflection light source 5 and the diffuse reflection light source 6, it is preferable to consider environmental factors such as fluctuation of the passline, ease of deposition of dust, and heat influence.

Since there is no conveying roll for several tens of meters at the subsequent stage of the molten zinc pot of CGL, the passline is not stable. There is also a technique of stabilizing a passline using an electromagnet (refer to Patent Literature 3). However, the technique basically intends to suppress flutter at an installation position of an air knife for uniformizing the adhesion amount of molten zinc. Therefore, the position and inclination of the passline fluctuate immediately after alloying heating, which is a timing to be a temperature measurement target. Therefore, it is preferable to optimize installation conditions and irradiation light of the specular reflection light source 5 and the diffuse reflection light source 6. Hereinafter, an example of installation conditions of the specular reflection light source 5 and the diffuse reflection light source 6 will be described on the premise of the arrangement illustrated in FIG. 4, although the concept is the same in other arrangements.

Now, a longitudinal direction of the hot-dip zinc plated steel sheet S is defined as a y-axis direction, a width direction of the hot-dip zinc plated steel sheet S is defined as a c-axis direction, the amount of fluctuation of the passline position of the hot-dip zinc plated steel sheet S from a reference position is defined as $\pm\Delta d$, the amount of angular fluctuation of the surface of the hot-dip zinc plated steel sheet S from a reference angle in an x-axis direction is defined as $\pm\Delta\theta x$, and the amount of angular fluctuation from a reference angle in the y-axis direction is defined as $\pm\Delta\theta y$.

First, installation conditions of the specular reflection light source 5 will be described with reference to FIGS. 7(a) and 7(b). In order to stably measure the luminance under the specular reflection condition regardless of the fluctuation in the passline, it is necessary to install the light emitting surface of the specular reflection light source 5 at a position under the specular reflection condition even with a fluctuation of the passline of the hot-dip zinc plated steel sheet S. That is, when a distance from the radiation thermometer 4 to the passline is L, an incident angle of the specular reflection light source 5 and a light receiving angle of the radiation thermometer 4 are $\varphi 1$, and the distance from the specular reflection light source 5 to the passline is L1, the difference in irradiation position due to the fluctuation amount of the passline in the y-axis direction on the surface of the hot-dip zinc plated steel sheet S is $\pm \Delta d \times \sin\varphi 1$, and the difference in the imaging position is also $\pm \Delta d \times \sin\varphi 1$. Furthermore, assuming that the y-axis angle fluctuation amount is $\pm\Delta\theta y$, the position of the specular reflection light source 5 in the specular reflection direction with respect to an imaging visual field of the radiation thermometer 4 fluctuates by $\pm L1\Delta\theta y/\cos\varphi$. In the x-axis direction, there is no influence of the passline fluctuation on the irradiation position and the imaging position. However, in consideration of $\pm\Delta\theta x$ as the x-axis angle fluctuation amount, the position of the specular reflection light source 5 in the specular reflection direction with respect to the visual field of the radiation thermometer 4 fluctuates by $\pm L1\Delta\theta x/\cos\varphi 1$. Therefore, it is preferable to set the size of the light emitting surface of the specular reflection light source 5 to be larger including the fluctuation $\pm L1\Delta\theta x/\cos\varphi 1$ in the x-axis direction and the fluctuation $\pm(2\Delta d \times \sin\varphi 1 + L1\Delta\theta y/\cos\varphi)$ in the y-axis direction.

Next, installation conditions of the diffuse reflection light source 6 will be described with reference to FIGS. 8(a) and 8(b). In order to stably measure the luminance under the diffuse reflection condition regardless of the passline fluctuation, it is necessary to install the light source such that the imaging range is uniformly irradiated even with a fluctuation of the passline of the hot-dip zinc plated steel sheet S. This is because, unlike the case of the specular reflection light source 5 described above, the influence of the light projection/reception angle on the diffuse reflection light amount is small in the case of diffuse reflection. That is, when the distance from the diffuse reflection light source 6 to the passline is L2, the difference in irradiation position due to the fluctuation amount of the passline in the y-axis direction on the surface of the hot-dip zinc plated steel sheet S is $\pm$ $\Delta d \times \sin\varphi 2$, and the difference in imaging position is $\pm$ $\Delta d \times \sin\varphi 1$, but the displacement direction of the irradiation position and the imaging position is opposite due to an arrangement relationship. In the x-axis direction, there is no influence of the passline fluctuation on the irradiation position and the imaging position. Accordingly, the diffuse reflection light source 6 is preferably installed at a position with the distance L2 capable of uniform irradiation within a range of $\pm\Delta d(\sin\varphi 2-\sin\varphi 1)$ in the y-axis direction. The installation condition is more preferably set to have a further margin in consideration of other conditions such as installation accuracy.

Moreover, the diffuse reflection light source needs to be applied to an optical system under a condition of a low reflectance such as a diffuse reflection condition, and at the same time, needs to ensure a sufficiently high reflection light amount with respect to self-emitted light, which requires irradiation of light with very high intensity. However, using an excessively high-intensity infrared light source, for example, a halogen light source, would allow the light source itself to heat the hot-dip zinc plated steel sheet, leading to a possibility of a change in the surface temperature of the hot-dip zinc plated steel sheet. Therefore, based on the concept of radiation heat transfer, the condition illustrated in the following formula (2) is to be preferably satisfied. Here, an allowable temperature change amount is $\Delta T$(°C), an output of the diffuse reflection light source is P(W), an absorptivity (emissivity) of the hot-dip zinc plated steel sheet in an irradiation region of the diffuse reflection light source is $\varepsilon_h$, an irradiation area of the diffuse reflection light source on the hot-dip zinc plated steel sheet is $\alpha$(mm$^2$), a thickness of the hot-dip zinc plated steel sheet is t(mm), a specific gravity of iron is $\rho$(g/mm$^3$), a specific heat of iron is c (J/g), an irradiation region of the diffuse reflection light source in the longitudinal direction of the hot-dip zinc plated steel sheet is l(m), and the conveyance line speed of the hot-dip zinc plated steel sheet is v(m/s).

$$\Delta T > \left|\frac{\varepsilon_h P l}{c \rho \alpha t v}\right| \qquad (2)$$

For example, when the allowable temperature change amount $\Delta T$(°C) is 1(°C), the output P(W) of the halogen light source is 100(W), the absorptivity (emissivity) $\varepsilon_h$ of the hot-dip zinc plated steel sheet in the irradiation region of the halogen light source is 0.8, the irradiation area $\alpha$(mm$^2$) of the halogen light source on the hot-dip zinc plated steel sheet is 10000 (mm$^2$), the thickness t(mm) of the hot-dip zinc plated steel sheet is 1(mm), the specific gravity $\rho$ (g/mm$^3$) of iron is 0.78 (g/mm$^3$), the specific heat c(J/g) of iron is 0.435 (J/g), the irradiation region l(m) of the halogen light source in the longitudinal direction of the hot-dip zinc plated steel sheet is 100(m), and the conveyance line speed v(m/s) of the hot-dip zinc plated steel sheet is 0.5(m/s), the result is such that the temperature rise of the irradiation site is 0.471(°C), the temperature being lower than the allowable temperature change amount 1(°C). Consequently, it is preferable to use a halogen light source having an output P of 100(W) under these conditions.

Furthermore, the present embodiment performs imaging on the moving hot-dip zinc plated steel sheet by switching the radiation light amount, the specular reflection light amount, and the diffuse reflection light amount, at mutually different timings. In this case, it is most preferable that the imaging be completed three times in total, that is, once for measuring the radiation light amount, once for measuring the specular reflection light amount, and once for measuring the diffuse reflection light amount, within a range that can be regarded as the same surface property. That is, the present embodiment assumes that alloying progress is the same when estimating the emissivity from the specular reflection luminance and the diffuse reflection luminance, and therefore, when the specular reflection light amount measurement and the diffuse reflection light amount measurement are performed with different surface properties, it would be difficult to estimate the emissivity by the model. In addition, when the surface property at the time of measuring the radiation light amount is different from the property at estimation of the emissivity, the actual emissivity and the estimated emissivity would be different. However, when the distribution of the degree of alloying unevenness of the hot-dip zinc plated steel sheet changes in a narrow range, and the surface properties of the portions are not the same due to the relationship among the responsiveness of the mechanical shutter, the exposure time, and the conveyance speed of the hot-dip zinc plated steel sheet, it is preferable to perform correction using filtering in the spatial direction or the temporal direction. Specifically, by performing filtering using a mean value, a maximum value, a minimum value, a median, and a percentile of a radiation light amount, a specular reflection light amount, a diffuse reflection light amount, an emissivity, and a surface temperature within a certain imaging range or in a certain period in the past, it is possible to reduce the influence of the degree of alloying unevenness. FIGS. 9(a) and 9(b) illustrate actual temperature measurement results before and after filtering, respectively. The filtering was performed for 30 seconds, and the median of the radiation light amount, the specular reflection light amount, and the diffuse reflection light amount were used. That is, the median of all the measurement values for 15 seconds before and after each measurement point was calculated, and the calculation result was used as a measurement point after filtering. As illustrated in FIGS. 9(a) and 9(b), it can be confirmed that the temperature values fluctuating violently up and down with no physical factors have changed to have suppressed fluctuations by filtering.

Incidentally, when the filtering processing is used, there is a possibility that a delay occurs due to the processing. In this case, the surface temperature can be measured with less delay by using a configuration of the temperature measuring apparatus of modifications described below.

[First modification]

FIG. 10 illustrates a configuration of a first modification of the temperature measuring apparatus according to an embodiment of the present invention. As illustrated in FIG. 10, in the present modification, three radiation thermometers are installed in series with respect to the conveyance direction of the hot-dip zinc plated steel sheet S and at the same position in the width direction of the hot-dip zinc plated steel sheet S. The three radiation thermometers are: a radiation thermometer 4a not including a light source; a radiation thermometer 4b including the specular reflection light source 5; and a radiation thermometer 4c including the diffuse reflection light source 6. Although the three radiation thermometers may be installed in any order, it is preferable to install the three radiation thermometers so as not to allow the irradiation light beams of the light sources to interfere with each other. Such a configuration enables alignment of imaging data of each radiation thermometer based on the conveyance speed of the hot-dip zinc plated steel sheet S and the distance between the radiation thermometers, making it possible to use a high-intensity halogen light source at a high imaging cycle without switching the light source by a mechanical shutter. In addition, the same portion on the surface of the steel sheet can be imaged with the imaging cycle of the radiation thermometer.

[Second modification]

FIG. 11 illustrates a second modification of the temperature measuring apparatus according to an embodiment of the present invention. In the present modification, the radiation thermometer 4 is constituted with a line sensor or an area sensor having a long visual field in the conveyance direction of the hot-dip zinc plated steel sheet S. As illustrated in FIG. 11, the visual field in the longitudinal direction of the radiation thermometer 4 is divided into three, light shielding plates 9a and 9b are installed, and then, each visual field is imaged as a radiation light region, a specular reflection light irradiation region, and a diffuse reflection light irradiation region. With this configuration, a high-intensity halogen light source can be used at a high imaging cycle without switching the light source by a mechanical shutter. Note that it is preferable to select the arrangement of the light sources and the size of each of the light shielding plates 9a and 9b so as not to allow the irradiation light beams of the light sources to interfere with each other. Furthermore, it is preferable to design the apparatus in consideration of a difference in spectral sensitivity characteristic between the end and a central portion of the imaging visual field. Specifically, regarding visual field under the diffuse reflection condition that greatly influences the emissivity and the visual field for measuring the radiation light amount, it is preferable to set the position at the same distance from the center of the visual field. In particular, in the case of using a short pass filter, a long pass filter, and a band pass filter, it is preferable to perform correction because the incident angle of light to the radiation thermometer at the end of the imaging visual field is different from the incident angle at the center of the imaging visual field. Furthermore, since the diffuse reflection light amount influences the accuracy more than the specular reflection light amount, it is preferable to arrange the light source and the sensor such that the incident positions of the radiation light and the diffuse reflection component are at the same distance from the center position in the imaging visual field.

The embodiments to which the invention made by the present inventors is applied have been described as above. Note that the present invention is not limited by the description and drawings constituting a part of the disclosure of the present invention according to the present embodiments. For example, in the present embodiment, a hot-dip zinc plated steel sheet is set as a measurement object. However, the measurement object is not limited to the hot-dip zinc plated steel sheet, and the present invention can be generally applied to substances in which the emissivity can be uniquely determined from specular reflection light and diffuse reflection light. In this manner, other embodiments, examples, operation techniques, and the like made by those skilled in the art based on the present embodiment are all included in the scope of the present invention as defined by the appended claims.

In addition, the present invention may be applied to a temperature measurement step included in a method of manufacturing a hot-dip zinc plated steel sheet, and the temperature of the hot-dip zinc plated steel sheet may be measured in a known or existing step of manufacturing a hot-dip zinc plated steel sheet. That is, the method of manufacturing a hot-dip zinc plated steel sheet includes: a temperature measurement step of measuring a surface temperature of a hot-dip zinc plated steel sheet by the hot-dip zinc plated steel sheet temperature measuring method according to the present invention; and a step of controlling manufacturing conditions of the hot-dip zinc plated steel sheet based on the measured surface temperature of the hot-dip zinc plated steel sheet.

In this case, it is preferable to provide, in the middle of a known, unknown, or existing production step, a temperature measurement step of measuring the temperature of the hot-dip zinc plated steel sheet in the middle of production using the temperature measuring method according to the present invention. In particular, in the hot-dip zinc plated steel sheet, it is preferable to measure the temperature of the steel sheet having an unknown emissivity fluctuating in accordance with the degree of alloying of plating. When the feedback control is used, the temperature measurement step uses the temperature measured in the temperature measurement step to control a condition of one or a plurality of processes before the temperature measurement step among the processes included in the manufacturing step. When the control is used in the case of measuring the temperature of the steel sheet to which zinc is attached or not attached during conveyance, it is most favorable because the effect of the present invention can be utilized to the maximum.

More specifically, the step may be provided immediately after the heating apparatus that promotes alloying, which is after zinc adhesion to the surface of the steel sheet, and feedback control may be used for the output of the heating apparatus so as to obtain a temperature on the heating apparatus exit side with an appropriate degree of alloying. Furthermore, control may be performed to obtain an appropriate degree of alloying by performing a feedback of output to an actuator that controls a factor having an influence on the likelihood of alloying, such as a dew point in the preceding process. In particular, it is most preferable to provide the step in the middle of a hot-dip galvanizing line for applying hot-dip zinc plating to a steel sheet.

Furthermore, when alloying is performed in an induction heating furnace (also referred to as an IH heating furnace as abbreviation), it is most preferable to measure the temperature immediately after the exit side of the IH heating furnace, which is the highest point of the temperature in the alloying process after plating, in the hot-dip galvanizing line. When the maximum temperature in the alloying process is too low, the alloying does not sufficiently progress, and when the maximum temperature is too high, the crystal grains of the structure become coarse and adversely affect the material, having a possibility of excessive progress of alloying. Therefore, temperature control is very important. By controlling the output of the IH heating furnace so that the temperature immediately after the IH exit side is within a predetermined control range using the present apparatus, it is possible to manufacture a hot-dip zinc plated steel sheet having a target material and a target degree of alloying.

From the above reason, the present invention is most effective for the production of the hot-dip galvannealed steel sheet (GA) among hot-dip zinc plated steel sheets.

In addition, the present invention may be applied as a temperature measuring apparatus constituting a manufacturing equipment for a hot-dip zinc plated steel sheet. In addition, a hot-dip zinc plated steel sheet may be manufactured using the manufacturing equipment on the basis of the surface temperature of the hot-dip zinc plated steel sheet measured by the temperature measuring apparatus according to the present invention. In this case, the manufacturing equipment for manufacturing the hot-dip zinc plated steel sheet may be any of known, unknown, and existing facilities. In addition, the manufacturing equipment for manufacturing the hot-dip zinc plated steel sheet includes a hot-dip zinc plating equipment for applying hot-dip zinc plating to the steel sheet. The temperature measuring apparatus according to the present invention is preferably provided in the conveyance equipment. Furthermore, it is most preferable that the transfer roller is provided between two conveyance rollers provided in the hot-dip zinc plating equipment. The present invention is most effective in manufacturing the hot-dip galvannealed steel sheet (GA) among hot-dip zinc plated steel sheets.

Furthermore, the present invention may be applied to a steel sheet quality control method, and the quality control of the steel sheet may be performed by measuring the temperature of the steel sheet. Specifically, in the present invention, the temperature of the steel sheet is measured in the temperature measurement step, and the quality control of the steel sheet can be performed based on the measurement result obtained in the temperature measurement step. A subsequent quality control step determines whether the manufactured steel sheet satisfies a predetermined standard based on the measurement result obtained in the temperature measurement step to achieve quality control of the steel material. According to such a method for quality control of a steel sheet, a high-quality steel sheet can be provided. The present invention is most effective in manufacturing the hot-dip galvannealed steel sheet (GA) among hot-dip zinc plated steel sheets.

[Example]

In the present example, the surface temperature of the actual CGL induction-heating furnace exit side hot-dip zinc plated steel sheet was measured by the configuration illustrated in FIG. 4 using the model illustrated in FIG. 2. It is known that the surface emissivity greatly fluctuates on the exit side of the IH heating furnace due to alloying of the zinc plate and the steel sheet. The radiation thermometer uses an area sensor of an InGaAs element with an optical system that transmits only a wavelength of 1550±50 nm by a long pass filter. An infrared LED was used as a specular reflection light source, and a halogen light source and a mechanical shutter were used as a diffuse reflection light source. In each imaging, the exposure time was set to 150 μs for the radiation light amount, 200 μs for the specular reflection light amount and the diffuse reflection light amount. The specular reflection light amount and the diffuse reflection light amount were each corrected by subtracting the radiation light component. The median filtering was performed for 30 seconds for each light amount obtained. FIG. 12 illustrates transitions of the obtained radiation light amount, the corrected specular reflection light amount, and the corrected diffuse reflection light amount. In FIG. 12, the horizontal axis represents the measurement time (unit: hour), and the vertical axis represents the luminance value. A threshold is set for the specular reflectance using the measurement result of FIG. 12. When the specular reflectance is the threshold or more, step S1 is performed; when the specular reflectance is less than the threshold, step S2 is performed. The coordinate position and the emissivity on the model are estimated using the fixed emissivity (about 0.2) in step S1 and using the value of the diffuse reflection component in step S2.

FIG. 13 illustrates temperature measurement results for the same measurement region of a hot-dip zinc plated steel sheet. Specifically, the figure includes present invention example, Comparative Example 1 (monochromatic radiation temperature measurement) in which the surface temperature is calculated with the emissivity as a fixed value, and Comparative Example 2 (simulation) in which the surface temperature is calculated using heat transfer calculation. In FIG. 13, the horizontal axis represents the measurement time (unit: hour), and the vertical axis represents the relative temperature (unit: °C). The relative temperature indicates the temperature change (°C) from a certain reference temperature defined as 0°C. As illustrated in FIG. 13, it can be seen that the surface temperature of Comparative Example 1 largely deviates from the surface temperature of Comparative Example 2, whereas the surface temperature of the present invention example roughly matches the surface temperature of Comparative Example 2. Furthermore, FIG. 14 illustrates the degree of alloying at a portion where the surface temperature of the present invention example is different from the surface temperature of Comparative Example 2. In FIG. 14, the vertical axis represents the relative measured temperature (unit: °C), and the horizontal axis represents the degree of alloying (unit: mass%). The relative measured temperature indicates the temperature change (°C) from a certain reference temperature defined as 0°C. On the other hand, the relative degree of alloying indicates the change of mass% from a certain reference alloying degree defined as 0 mass%. In addition, the degree of alloying indicates the Fe concentration in a case where the entire alloying phase is 100 mass% in a hot-dip zinc plated steel sheet in terms of mass percentage (mass%), and too high or too low concentration will result in poor quality. Measurement of the degree of alloying can be performed by using a method of calculating the degree of alloying from the mass of iron generally chemically separated and contained, or a method using X-ray diffraction (XRD).

Since the conditions such as the size and the conveyance speed of the hot-dip zinc plated steel sheet are constant, it is expected that there is a physical correlation between the degree of alloying and the surface temperature. However, as illustrated in FIG. 14, there is no correlation in Comparative Example 2. In contrast, there is a clear correlation in the present invention example. Therefore, it is conceivable that the temperature change related to the emissivity fluctuation, which cannot be grasped in Comparative Example 2, can be grasped by the present invention example. From the above, it has become clear that the present invention makes it possible to accurately measure the surface temperature of the hot-dip zinc plated steel sheet in the alloying process.

Industrial Applicability

According to the present invention, it is possible to provide the surface temperature measuring method and the surface temperature measuring apparatus capable of accurately measuring the surface temperature of a measurement object regardless of fluctuations in the emissivity of the surface of the measurement object. In addition, according to the present invention, it is possible to provide a hot-dip zinc plated steel sheet manufacturing method and a manufacturing equipment capable of manufacturing a hot-dip zinc plated steel sheet with high yield by accurately measuring a steel sheet temperature in a hot-dip galvanizing line regardless of an alloying process.

Reference Signs List

1 THERMOCOUPLE
2 BLACK BODY SPRAY
3 HEATER
4, 4a, 4b, 4c RADIATION THERMOMETER
5 SPECULAR REFLECTION LIGHT SOURCE
6 DIFFUSE REFLECTION LIGHT SOURCE
7 SHUTTER
8 COMPUTING UNIT
9a, 9b LIGHT SHIELDING PLATE
10 TEMPERATURE MEASURING APPARATUS
11 MOLTEN ZINC POT
12 HEATING FURNACE

13 HEAT RETENTION ZONE
S HOT-DIP ZINC PLATED STEEL SHEET

## Claims

1. A surface temperature measuring method comprising:

   a first imaging step of acquiring a radiation light amount of a surface of a measurement object;
   a second imaging step of irradiating the surface of the measurement object with light under a specular reflection condition, and acquiring a specular reflection light amount;
   a third imaging step of irradiating the surface of the measurement object with light under a diffuse reflection condition, and acquiring a diffuse reflection light amount;
   in a case where a specular reflection light amount acquired in the second imaging step is less than a predetermined value, an emissivity calculating step of calculating an emissivity of the surface of the measurement object by using a model indicating a relationship between an emissivity and a specular reflectance, and a relationship between the emissivity and a diffuse reflectance of the surface of the measurement object, the specular reflection light amount acquired in the second imaging step, and the diffuse reflection light amount acquired in the third imaging step, and in a case where the specular reflection light acquired in the second imaging step is a predetermined value or more, a fixed value is used as the emissivity; and
   a temperature measurement step of calculating a surface temperature of the measurement object using the radiation light amount acquired in the first imaging step and the emissivity calculated in the emissivity calculating step or determined by the fixed value.

2. The surface temperature measuring method according to claim 1, wherein each of the second imaging step and the third imaging step includes a step of correcting the specular reflection light amount and the diffuse reflection light amount by subtracting the radiation light amount acquired in the first imaging step.

3. The surface temperature measuring method according to claim 1 or 2, wherein the first imaging step, the second imaging step, and the third imaging step include a step of receiving light using a light receiving element having a plurality of visual fields to which acquisition ranges of the radiation light amount, the specular reflection light amount, and the diffuse reflection light amount are assigned in a conveyance direction of the measurement object.

4. The surface temperature measuring method according to any one of claims 1 to 3, wherein the measurement object is a hot-dip zinc plated steel sheet (S).

5. A surface temperature measuring apparatus (10) comprising:

   a first imaging unit (4) configured to acquire a radiation light amount of a surface of a measurement object;
   a second imaging unit (4,5) configured to irradiate the surface of the measurement object with light under a specular reflection condition, and to acquire a specular reflection light amount;
   a third imaging unit (4,6) configured to irradiate the surface of the measurement object with light under a diffuse reflection condition, and to acquire a diffuse reflection light amount;
   an emissivity calculating unit (8) configured to calculate, in a case where a specular reflection light amount acquired by the second imaging unit is less than a predetermined value, an emissivity of the surface of the measurement object by using a model indicating a relationship between an emissivity and a specular reflectance, and a relationship between the emissivity and a diffuse reflectance of the surface of the measurement object, the specular reflection light amount acquired by the second imaging unit, and the diffuse reflection light amount acquired by the third imaging unit, and in a case where the specular reflection light acquired by the second imaging unit is a predetermined value or more, use fixed value as the emissivity; and
   a temperature measurement unit (8) configured to calculate a surface temperature of the measurement object using the radiation light amount acquired by the first imaging unit and the emissivity calculated by the emissivity calculating unit or determined by the fixed value.

6. The surface temperature measuring apparatus (10) according to claim 5, wherein the measurement object is a hot-dip zinc plated steel sheet (S) .

7. A hot-dip zinc plated steel sheet (S) manufacturing method comprising manufacturing steps of manufacturing a hot-dip zinc plated steel sheet (S), the manufacturing steps of manufacturing the hot-dip zinc plated steel sheet (S) including: a temperature measurement step of measuring a surface temperature of the hot-dip zinc plated steel sheet (S) by the surface temperature measuring method according to any one of claims 1 to 4; and a step of controlling manufacturing conditions in the manufacturing steps by using the surface temperature measured in the temperature measurement step.

**8.** A hot-dip zinc plated steel sheet (S) manufacturing equipment comprising:

the surface temperature measuring apparatus (10) according to claim 5 or 6; and
an equipment that manufactures a hot-dip zinc plated steel sheet (S) based on a surface temperature of a hot-dip zinc plated steel sheet (S) measured by the surface temperature measuring apparatus (10).

## Patentansprüche

**1.** Ein Verfahren zur Messung der Oberflächentemperatur, aufweisend:

einen ersten Bildgebungsschritt zum Erfassen einer Strahlungslichtmenge einer Oberfläche eines Messobjekts;
einen zweiten Bildgebungsschritt zum Bestrahlen der Oberfläche des Messobjekts mit Licht unter einer Spiegelreflexionsbedingung und Erfassen einer Spiegelreflexionslichtmenge;
einen dritten Bildgebungsschritt zum Bestrahlen der Oberfläche des Messobjekts mit Licht unter einer diffusen Reflexionsbedingung und Erfassen einer diffusen Reflexionslichtmenge;
in einem Fall, in dem eine im zweiten Bildgebungsschritt erfasste Lichtmenge der Spiegelreflexion geringer ist als ein vorbestimmter Wert, einen Emissionsgradberechnungsschritt des Berechnens eines Emissionsgrads der Oberfläche des Messobjekts unter Verwendung eines Modells, das eine Beziehung zwischen einem Emissionsgrad und einem Spiegelreflexionsgrad und eine Beziehung zwischen dem Emissionsgrad und einem Streureflexionsgrad der Oberfläche des Messobjekts angibt, der im zweiten Bildgebungsschritt erfassten Lichtmenge der Spiegelreflexion, und die Menge des diffusen Reflexionslichts, die im dritten Bildgebungsschritt erfasst wird, und in einem Fall, in dem das im zweiten Bildgebungsschritt erfasste Spiegelreflexionslicht einen vorbestimmten Wert oder mehr beträgt, wird ein fester Wert als Emissionsgrad verwendet; und
einen Temperaturmessschritt des Berechnens einer Oberflächentemperatur des Messobjekts unter Verwendung der im ersten Bildgebungsschritt erfassten Strahlungslichtmenge und des im Emissionsgradberechnungsschritt berechneten oder durch den festen Wert bestimmten Emissionsgrads.

**2.** Das Verfahren zur Messung der Oberflächentemperatur gemäß Anspruch 1, wobei sowohl der zweite als auch der dritte Bildgebungsschritt einen Schritt zur Korrektur der Menge an spiegelndem Reflexionslicht und der Menge an diffusem Reflexionslicht durch Subtraktion der im ersten Bildgebungsschritt erfassten Strahlungslichtmenge umfasst.

**3.** Das Verfahren zur Messung der Oberflächentemperatur gemäß Anspruch 1 oder 2, wobei der erste Bildgebungsschritt, der zweite Bildgebungsschritt und der dritte Bildgebungsschritt einen Schritt des Empfangens von Licht unter Verwendung eines Lichtempfangselements mit einer Vielzahl von Sichtfeldern umfassen, denen Erfassungsbereiche der Strahlungslichtmenge, der Spiegelreflexionslichtmenge und der Streureflexionslichtmenge in einer Förderrichtung des Messobjekts zugeordnet sind.

**4.** Das Verfahren zur Messung der Oberflächentemperatur nach einem der Ansprüche 1 bis 3, wobei das Messobjekt ein feuerverzinktes Stahlblech (S) ist.

**5.** Ein Oberflächentemperaturmessgerät (10), aufweisend: eine erste Abbildungseinheit (4), die so konfiguriert ist, dass sie eine Strahlungslichtmenge

einer Oberfläche eines Messobjekts erfasst; eine zweite Abbildungseinheit (4, 5), die so konfiguriert ist, dass sie die Oberfläche des
Messobjekts mit Licht unter einer Spiegelreflexionsbedingung zu bestrahlen und eine Spiegelreflexionslichtmenge zu erfassen;
eine dritte Abbildungseinheit (4, 6), die so konfiguriert ist, dass sie die Oberfläche des Messobjekts mit Licht unter einer diffusen Reflexionsbedingung bestrahlt und eine diffuse Reflexionslichtmenge erfasst;
eine Emissionsgradberechnungseinheit (8), die so konfiguriert ist, dass sie in einem Fall, dass eine von der zweiten Bildeinheit erfasste Menge an spiegelndem Reflexionslicht geringer ist als ein vorbestimmter Wert, ein Emissionsvermögen der Oberfläche des Messobjekts unter Verwendung eines Modells, das eine Beziehung zwischen einem Emissionsvermögen und einem Spiegelreflexionsvermögen und eine Beziehung zwischen dem Emissionsvermögen und einem diffusen Reflexionsvermögen der Oberfläche des Messobjekts angibt, der von der zweiten Bildeinheit erfassten Menge an spiegelndem Reflexionslicht und die von der dritten Bildgebungseinheit erfasste Menge an diffusem Reflexionslicht, und in einem Fall, in dem das von der zweiten Bildgebungseinheit erfasste spiegelnde Reflexionslicht einen vorbestimmten Wert oder mehr beträgt, einen festen Wert als Emissionsgrad verwendet; und

eine Temperaturmesseinheit (8), die so konfiguriert ist, dass sie eine Oberflächentemperatur des Messobjekts unter Verwendung der von der ersten Bildgebungseinheit erfassten Strahlungslichtmenge und des von der Emissionsgradberechnungseinheit berechneten oder durch den festen Wert bestimmten Emissionsgrads berechnet.

**6.** Das Oberflächentemperaturmessgerät (10) gemäß Anspruch 5, wobei das Messobjekt ein feuerverzinktes Stahlblech (S) ist.

**7.** Ein Verfahren zur Herstellung eines feuerverzinkten Stahlblechs (S), das Herstellungsschritte zur Herstellung eines feuerverzinkten Stahlblechs (S) aufweist, wobei die Herstellungsschritte zur Herstellung des feuerverzinkten Stahlblechs (S) Folgendes beinhalten: einen Temperaturmessschritt zum Messen einer Oberflächentemperatur des feuerverzinkten Stahlblechs (S) durch das Verfahren zur Messung der Oberflächentemperatur gemäß einem der Ansprüche 1 bis 4; und einen Schritt zum Steuern von Herstellungsbedingungen in den Herstellungsschritten unter Verwendung der in dem Temperaturmessschritt gemessenen Oberflächentemperatur.

**8.** Eine Herstellungsausrüstung für feuerverzinktes Stahlblech (S), aufweisend:

das Oberflächentemperaturmessgerät (10) gemäß Anspruch 5 oder 6; und

eine Vorrichtung, die ein feuerverzinktes Stahlblech (S) auf der Grundlage einer Oberflächentemperatur eines feuerverzinkten Stahlblechs (S) herstellt, die von dem Oberflächentemperaturmessgerät (10) gemessen wird.

## Revendications

**1.** Procédé de mesure de température de surface comprenant :

une première étape d’imagerie consistant à acquérir une quantité de lumière de rayonnement d’une surface d’un objet de mesure ;

une deuxième étape d’imagerie consistant à irradier la surface de l’objet de mesure avec de la lumière en condition de réflexion spéculaire et à acquérir une quantité de lumière de réflexion spéculaire ;

une troisième étape d’imagerie consistant à irradier la surface de l’objet de mesure avec de la lumière en condition de réflexion diffuse et à acquérir une quantité de lumière de réflexion diffuse ;

dans le cas où une quantité de lumière de réflexion spéculaire acquise lors de la deuxième étape d’imagerie est inférieure à une valeur prédéterminée, une étape de calcul d’émissivité consistant à calculer une émissivité de la surface de l’objet de mesure en utilisant un modèle indiquant une relation entre une émissivité et une réflectance spéculaire, et une relation entre l’émissivité et une réflectance diffuse de la surface de l’objet de mesure, la quantité de lumière de réflexion spéculaire acquise lors de la deuxième étape d’imagerie et la quantité de lumière de réflexion diffuse acquise lors de la troisième étape d’imagerie, dans le cas où la lumière de réflexion spéculaire acquise lors de la deuxième étape d’imagerie est supérieure ou égale à une valeur prédéterminée, une valeur fixe est utilisée comme étant l’émissivité ; et

une étape de mesure de température consistant à calculer une température de surface de l’objet de mesure en utilisant la quantité de lumière de rayonnement acquise lors de la première étape d’imagerie et l’émissivité calculée lors de l’étape de calcul d’émissivité ou déterminée par la valeur fixe.

**2.** Procédé de mesure de température de surface selon la revendication 1, dans lequel chacune de la deuxième étape d’imagerie et de la troisième étape d’imagerie comprend une étape de correction de la quantité de lumière de réflexion spéculaire et de la quantité de lumière de réflexion diffuse par soustraction de la quantité de lumière de rayonnement acquise lors de la première étape d’imagerie.

**3.** Procédé de mesure de température de surface selon la revendication 1 ou 2, dans lequel la première étape d'imagerie, la deuxième étape d'imagerie et la troisième étape d'imagerie comprennent une étape de réception de la lumière en utilisant un élément de réception de lumière ayant une pluralité de champs visuels auxquels sont attribuées des plages d'acquisition de la quantité de lumière de rayonnement, de la quantité de lumière de réflexion spéculaire et de la quantité de lumière de réflexion diffuse dans une direction de transport de l'objet de mesure.

**4.** Procédé de mesure de température de surface selon l'une quelconque des revendications 1 à 3, dans lequel l'objet de mesure est une tôle d'acier zinguée à chaud (S).

**5.** Appareil de mesure de température de surface (10) comprenant :

une première unité d'imagerie (4) configurée pour acquérir une quantité de lumière de rayonnement d'une surface d'un objet de mesure ;
une deuxième unité d'imagerie (4, 5) configurée pour irradier la surface de l'objet de mesure avec de la lumière en condition de réflexion spéculaire et pour acquérir une quantité de lumière de réflexion spéculaire ;
une troisième unité d'imagerie (4, 6) configurée pour irradier la surface de l'objet de mesure avec de la lumière en condition de réflexion diffuse et pour acquérir une quantité de lumière de réflexion diffuse ;
une unité de calcul d'émissivité (8) configurée pour calculer, dans le cas où une quantité de lumière de réflexion spéculaire acquise par la deuxième unité d'imagerie est inférieure à une valeur prédéterminée, une émissivité de la surface de l'objet de mesure en utilisant un modèle indiquant une relation entre une émissivité et une réflectance spéculaire, et une relation entre l'émissivité et une réflectance diffuse de la surface de l'objet de mesure, la quantité de lumière de réflexion spéculaire acquise par la deuxième unité d'imagerie et la quantité de lumière de réflexion diffuse acquise par la troisième unité d'imagerie, et dans le cas où la lumière de réflexion spéculaire acquise par la deuxième unité d'imagerie est supérieure ou égale à une valeur prédéterminée, utiliser une valeur fixe comme étant l'émissivité ; et
une unité de mesure de température (8) configurée pour calculer une température de surface de l'objet de mesure en utilisant la quantité de lumière de rayonnement acquise par la première unité d'imagerie et l'émissivité calculée par l'unité de calcul d'émissivité ou déterminée par la valeur fixe.

**6.** Appareil de mesure de température de surface (10) selon la revendication 5, dans lequel l'objet de mesure est une tôle d'acier zinguée à chaud (S).

**7.** Procédé de fabrication d'une tôle d'acier zinguée à chaud (S) comprenant des étapes de fabrication consistant à fabriquer une tôle d'acier zinguée à chaud (S), les étapes de fabrication consistant à fabriquer la tôle d'acier zinguée à chaud (S) comprenant : une étape de mesure de température consistant à mesurer une température de surface de la tôle d'acier zinguée à chaud (S) par le procédé de mesure de température de surface selon l'une quelconque des revendications 1 à 4 ; et une étape de commande des conditions de fabrication lors des étapes de fabrication en utilisant la température de surface mesurée lors de l'étape de mesure de température.

**8.** Équipement de fabrication d'une tôle d'acier zinguée à chaud (S) comprenant :

l'appareil de mesure de température de surface (10) selon la revendication 5 ou 6 ; et
un équipement qui fabrique une tôle d'acier zinguée à chaud (S) sur la base d'une température de surface d'une tôle d'acier zinguée à chaud (S) mesurée par l'appareil de mesure de température de surface (10).

FIG.1

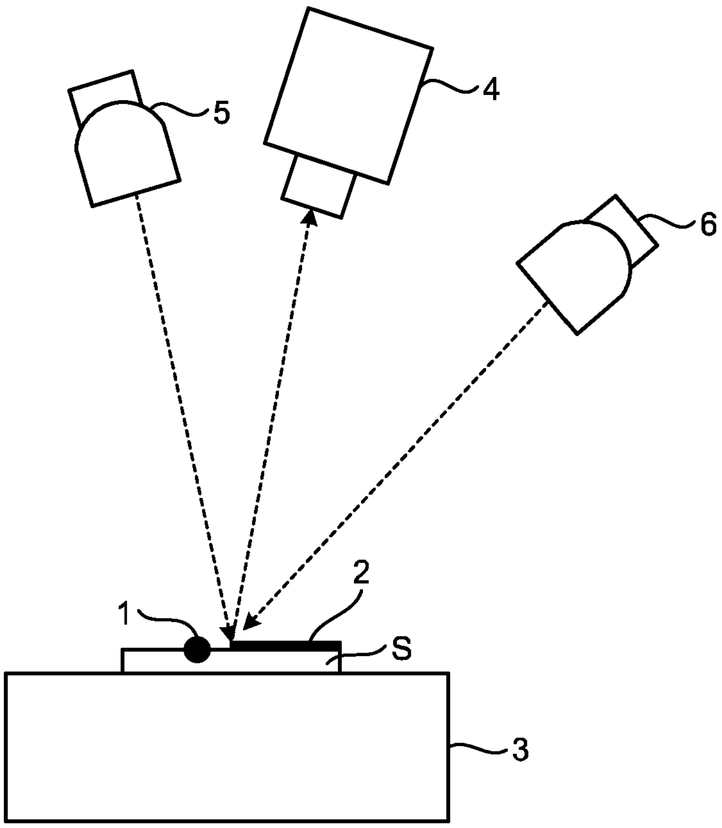

FIG.2

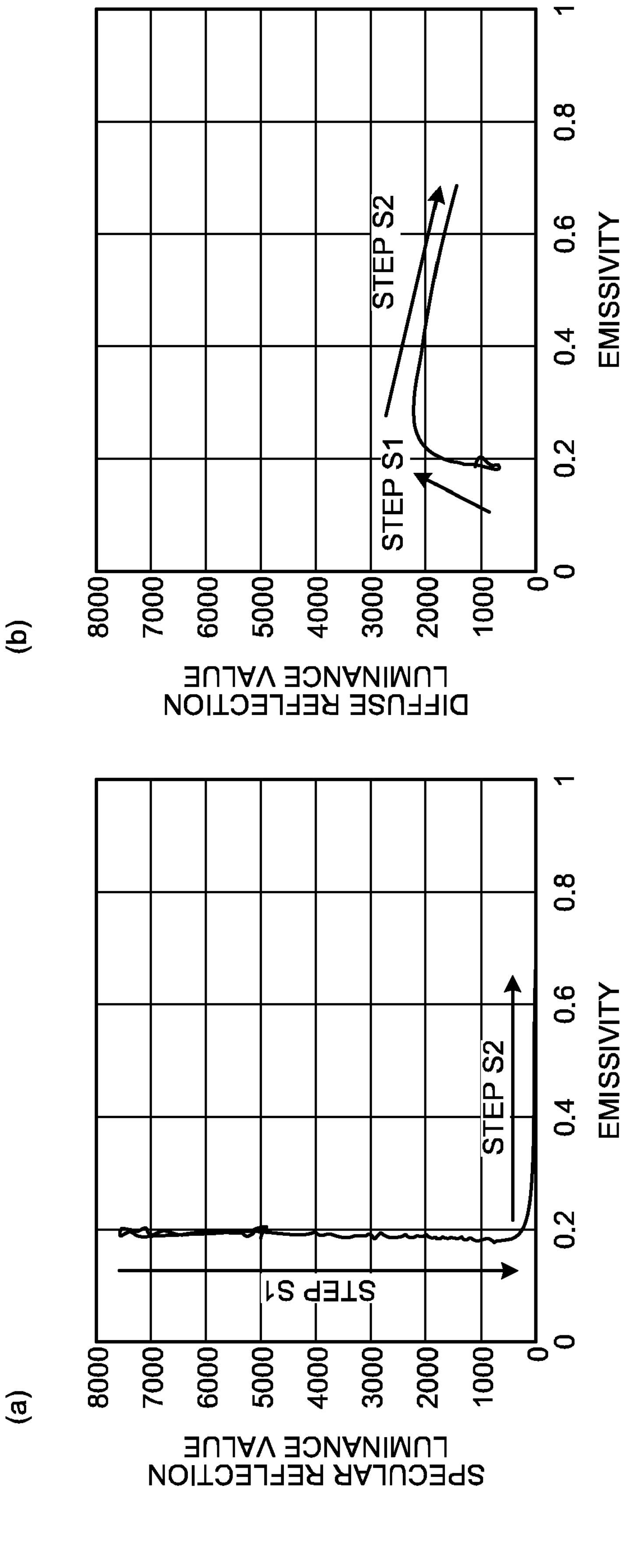
(a)
SPECULAR REFLECTION LUMINANCE VALUE
8000
7000
6000
5000
4000
3000
2000
1000
0
STEP S1
STEP S2
0
0.2
0.4
0.6
0.8
1
EMISSIVITY
(b)
DIFFUSE REFLECTION LUMINANCE VALUE
8000
7000
6000
5000
4000
3000
2000
1000
0
STEP S1
STEP S2
0
0.2
0.4
0.6
0.8
1
EMISSIVITY

FIG.3

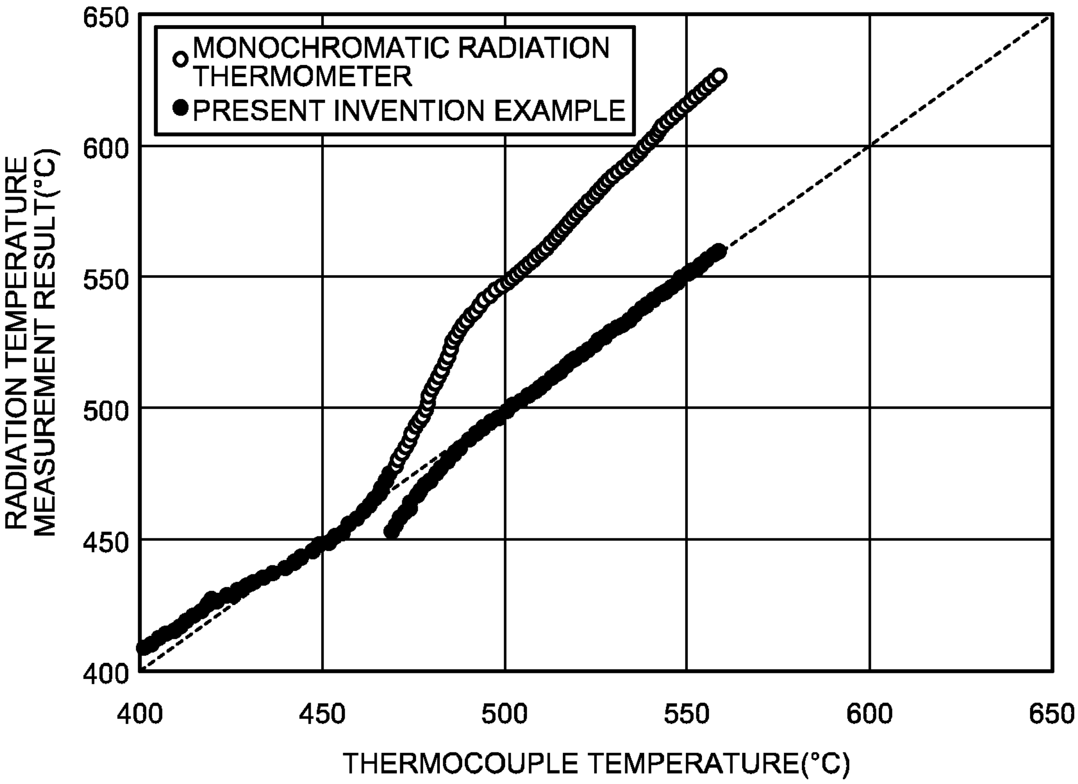

650
600
550
500
450
400
RADIATION TEMPERATURE MEASUREMENT RESULT(°C)
MONOCHROMATIC RADIATION THERMOMETER
PRESENT INVENTION EXAMPLE
400
450
500
550
600
650
THERMOCOUPLE TEMPERATURE(°C)

FIG.4

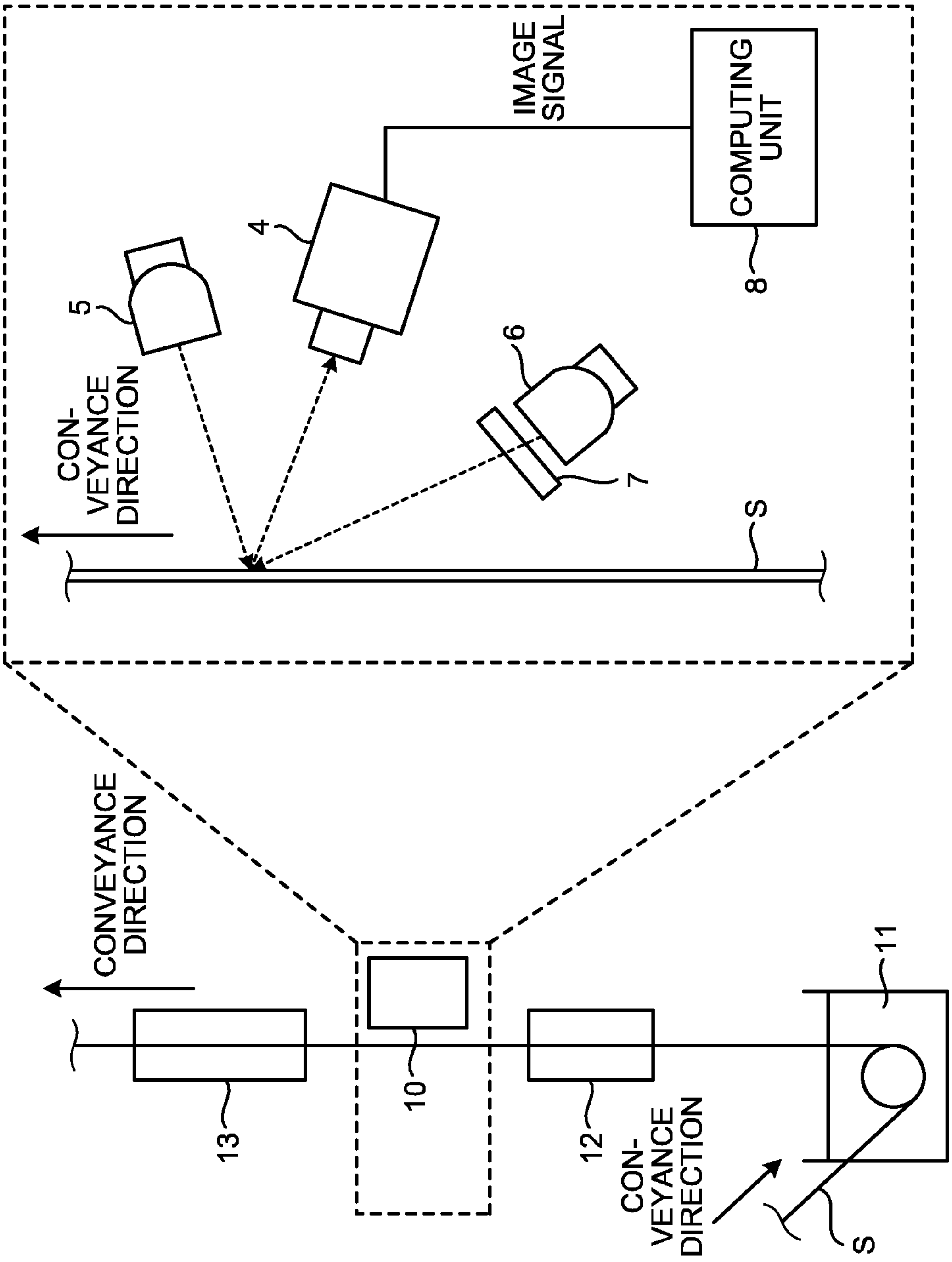

CON-
VEYANCE
DIRECTION
IMAGE
SIGNAL
COMPUTING
UNIT
4
5
6
7
8
S
CONVEYANCE
DIRECTION
10
11
12
13

FIG.5

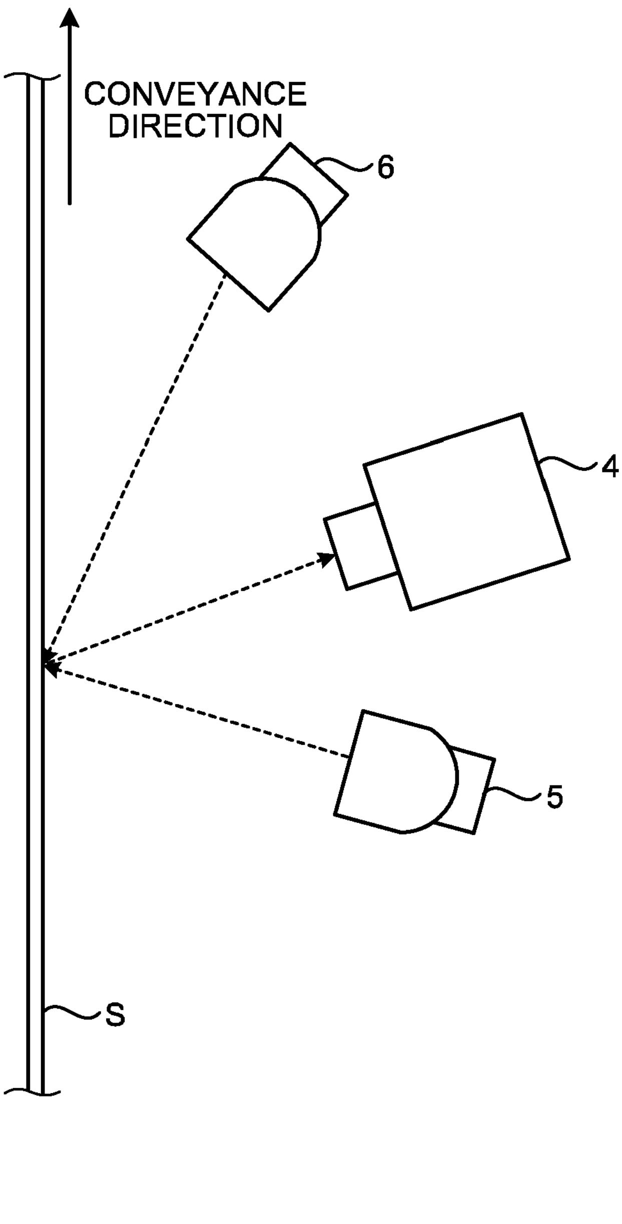

FIG.6

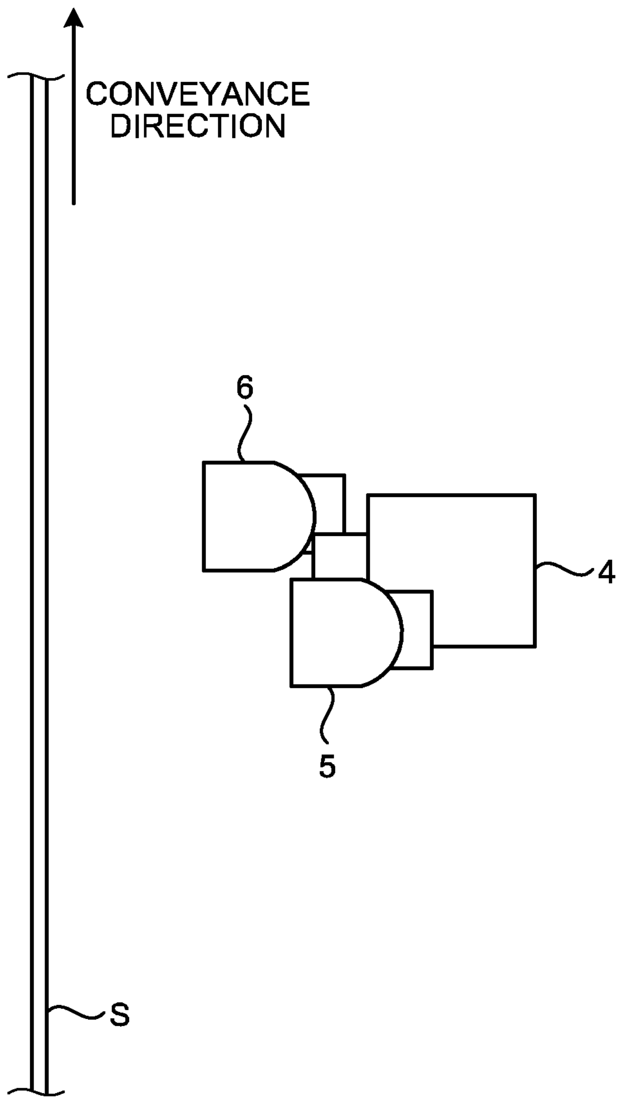

FIG.7

(a)

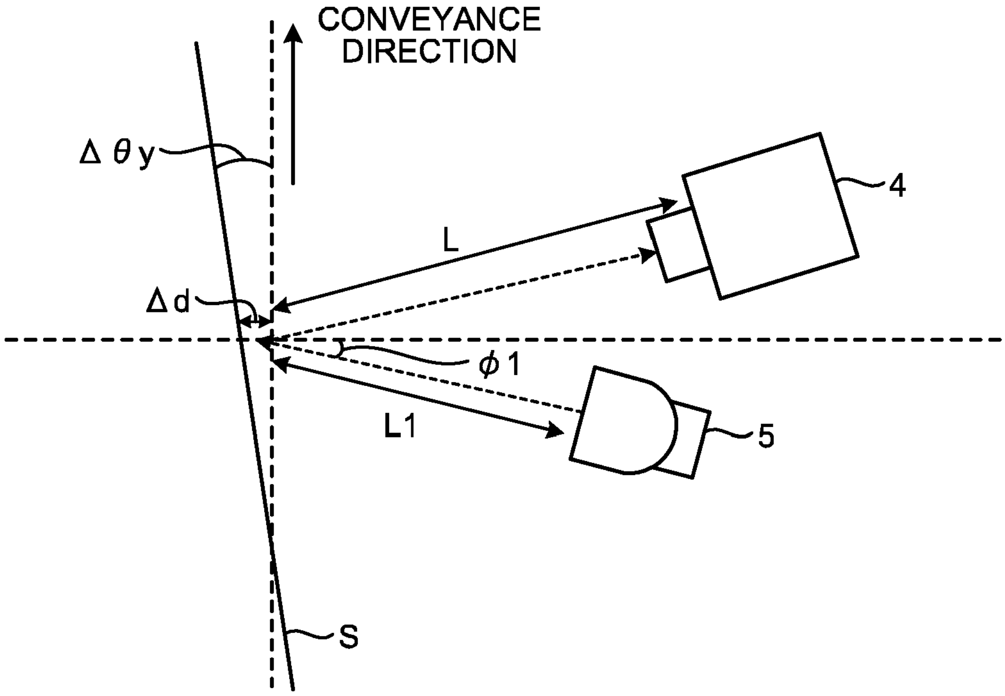
CONVEYANCE
DIRECTION
Δ θy
4
L
Δd
φ1
L1
5
S

(b)

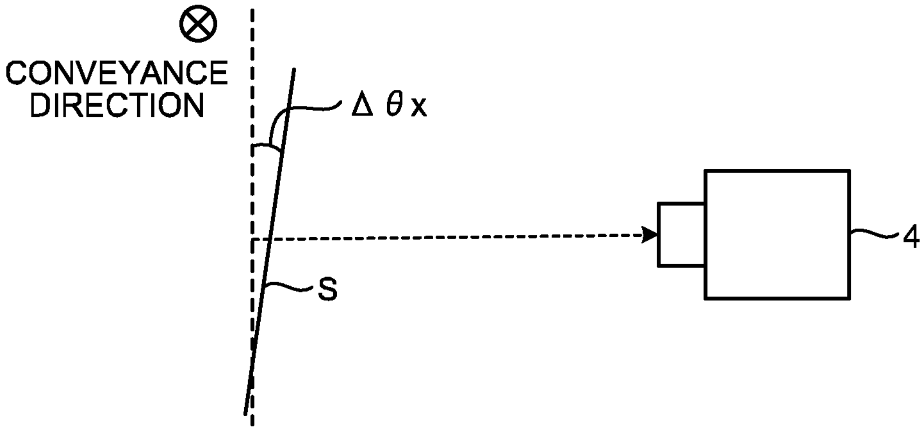
CONVEYANCE
DIRECTION
Δ θx
4
S

FIG.8

(a)

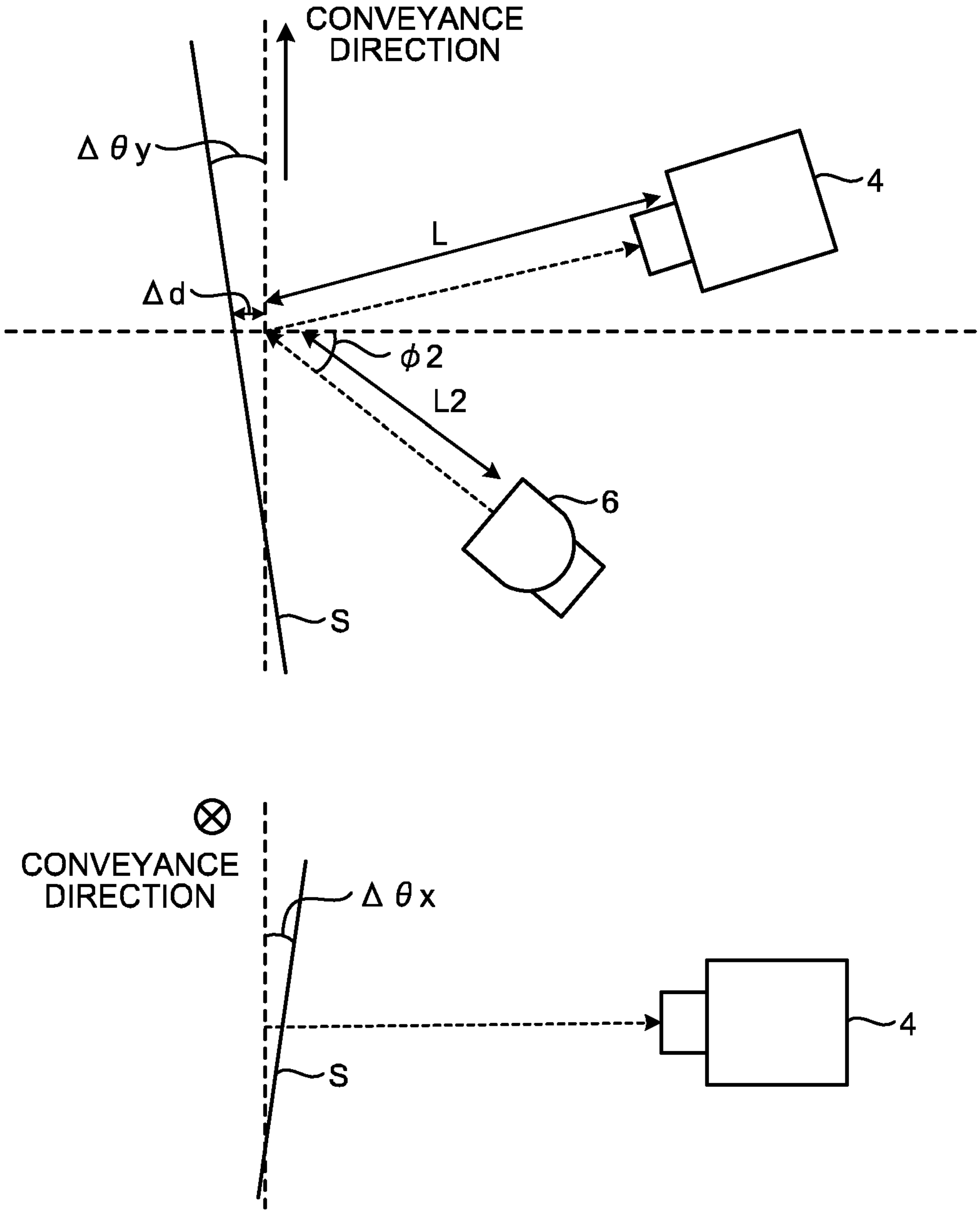
CONVEYANCE
DIRECTION
Δ θy
4
L
Δd
ϕ2
L2
6
S
(b)
CONVEYANCE
DIRECTION
Δ θx
4
S

FIG.9

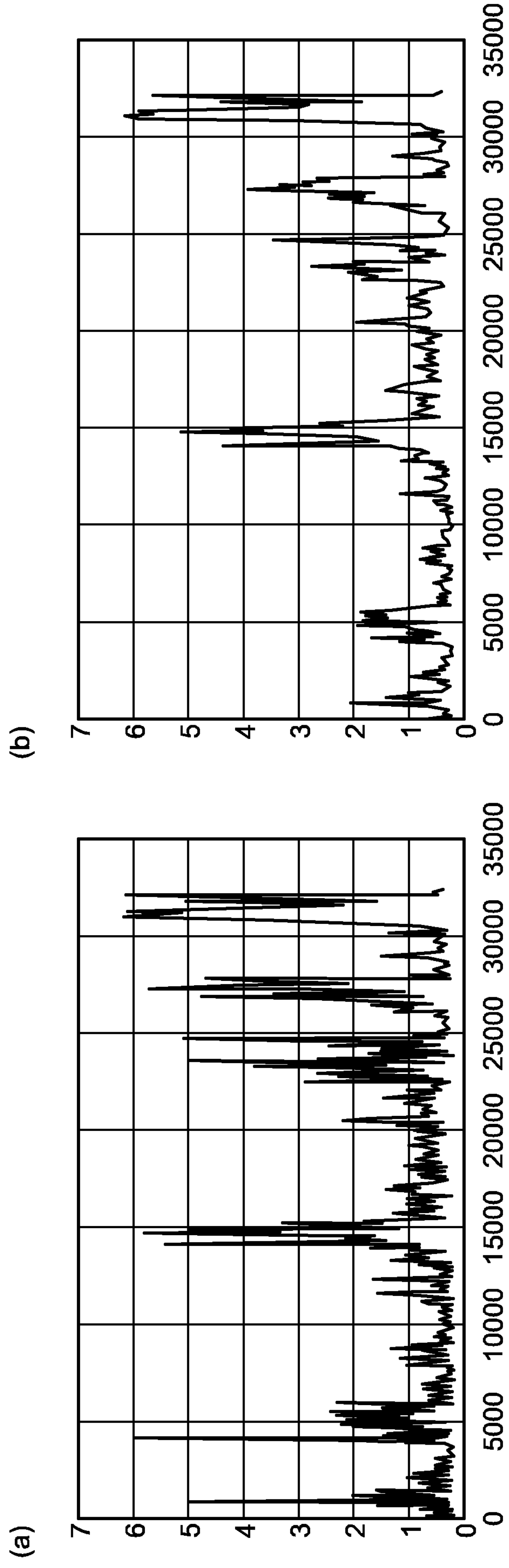

FIG.10

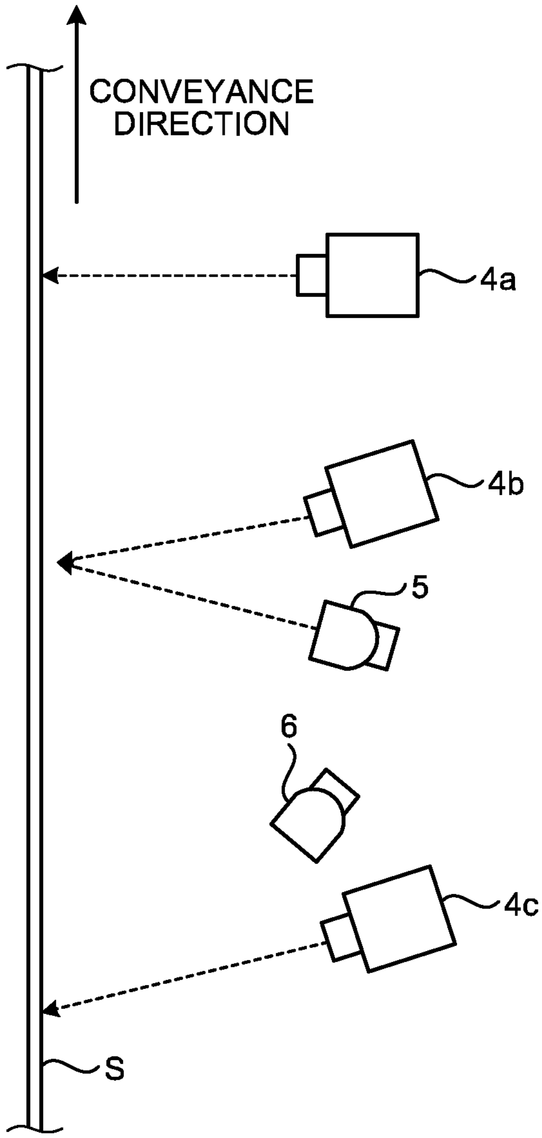

FIG.11

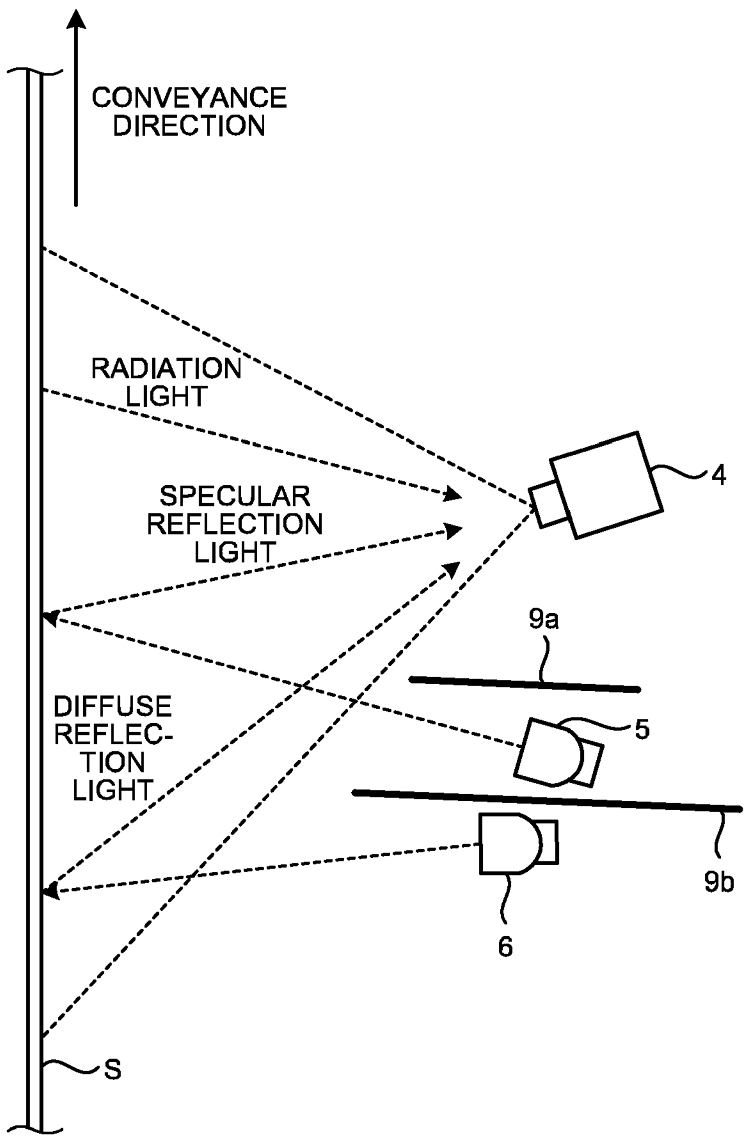
CONVEYANCE DIRECTION
RADIATION LIGHT
SPECULAR REFLECTION LIGHT
DIFFUSE REFLEC-TION LIGHT
4
9a
5
9b
6
S

FIG.12

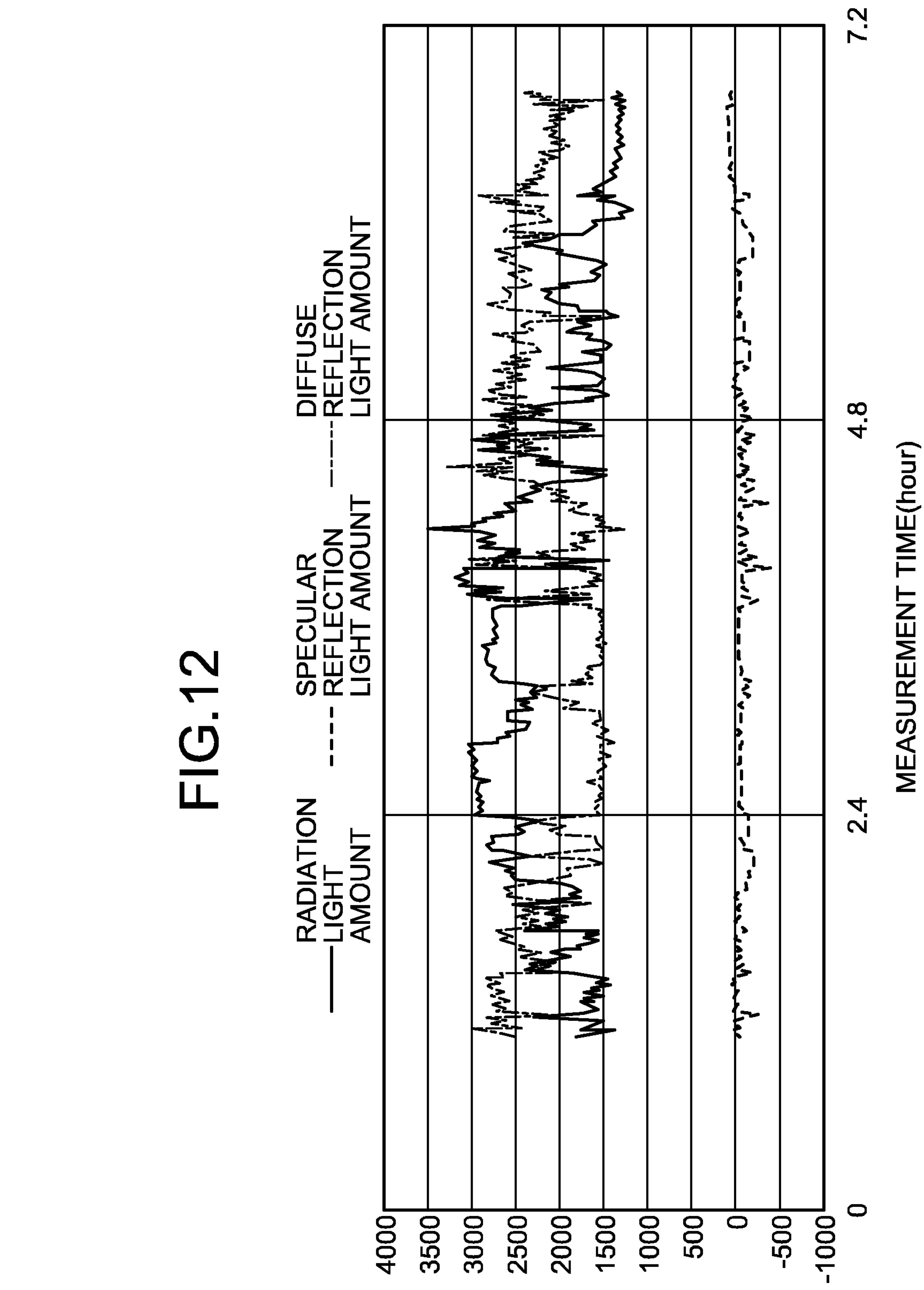
RADIATION LIGHT AMOUNT
SPECULAR REFLECTION LIGHT AMOUNT
DIFFUSE REFLECTION LIGHT AMOUNT
LUMINANCE VALUE
4000
3500
3000
2500
2000
1500
1000
500
0
-500
-1000
0
2.4
4.8
7.2
MEASUREMENT TIME(hour)

FIG.13

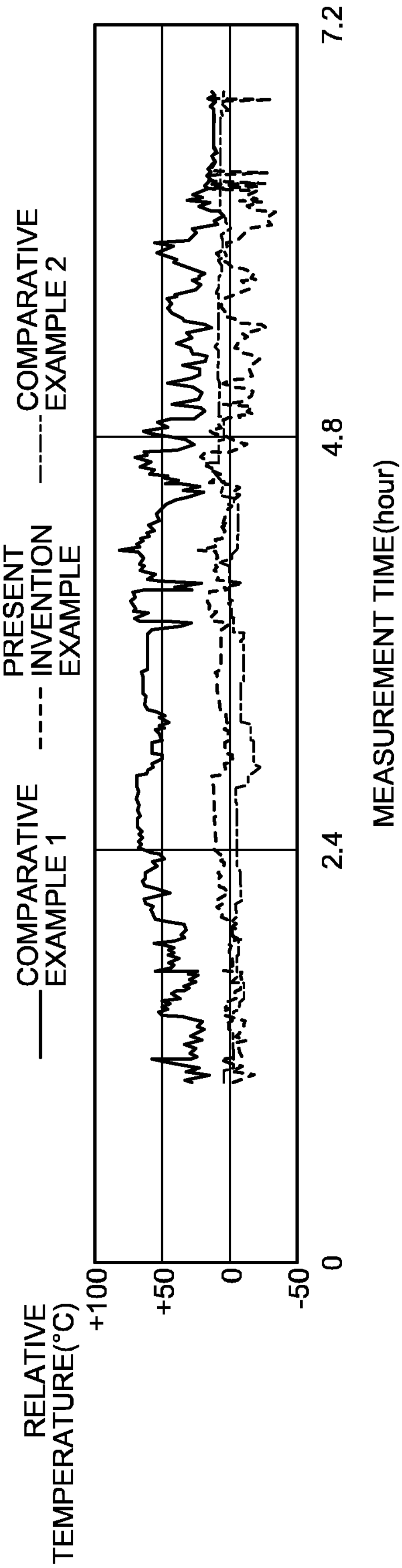
COMPARATIVE EXAMPLE 1
PRESENT INVENTION EXAMPLE
COMPARATIVE EXAMPLE 2
RELATIVE TEMPERATURE(°C)
+100
+50
0
-50
0
2.4
4.8
7.2
MEASUREMENT TIME(hour)

FIG.14

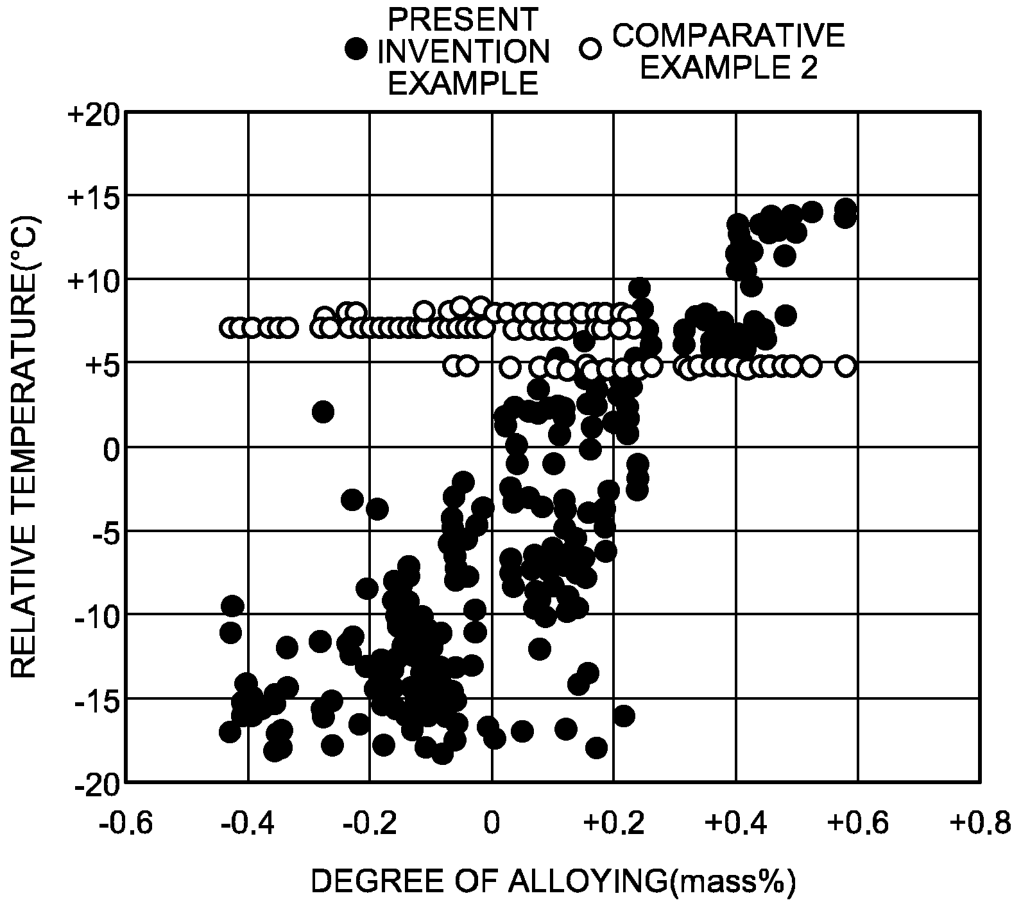
PRESENT INVENTION EXAMPLE
COMPARATIVE EXAMPLE 2
+20
+15
+10
+5
0
-5
-10
-15
-20
RELATIVE TEMPERATURE(°C)
-0.6
-0.4
-0.2
0
+0.2
+0.4
+0.6
+0.8
DEGREE OF ALLOYING(mass%)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020034430 A
- JP 4058568 A
- JP 10185693 A
- JP 5209792 A


### Non-patent literature cited in the description


- *Tetsu-to-Hagane (Iron and Steel)*, 1993, vol. 79 (7), 765-771
- *Tetsu-to-Hagane (Iron and Steel)*, 1993, vol. 79 (7), 772-778